# EUROPEAN PATENT APPLICATION

(11) **EP 4 418 112 A1**
(43) Date of publication of application: **21.08.2024**
(21) Application number: 22897747.6
(22) Date of filing: 21.11.2022
(51) Int. Cl.: G06F 9/451, G06F 8/38

(54) **METHOD FOR DISPLAYING LINKAGE ANIMATION, AND RELATED APPARATUS**

(30) Priority: 24.11.2021 CN 202111401251; 31.03.2022 CN 202210336382
(71) Applicant: Huawei Technologies Co., Ltd., Shenzhen, Guangdong 518129 (CN)
(72) Inventor: ZHANG, Ming, Shenzhen, Guangdong 518129 (CN); LV, Zhongwei, Shenzhen, Guangdong 518129 (CN); WANG, Yan, Shenzhen, Guangdong 518129 (CN)
(74) Representative: MERH-IP Matias Erny Reichl Hoffmann Patentanwälte PartG mbB
(86) International application number: PCT/CN2022/133173
(87) International publication number: WO 2023/093664

(57) **Abstract**

This application provides a linkage animation display method and a related apparatus. An electronic device can generate a theme package of a linkage animation based on image data that is input by a user. The theme package of the linkage animation may include a description file and image data for displaying the linkage animation. An animation effect in which the linkage animation is linked to one or more status change processes of the electronic device may be defined in the description file. When using the linkage animation, the electronic device may parse the theme package of the linkage animation to obtain an animation linked to the status change process of the electronic device, and synchronously play the animation in the status change process of the electronic device. In this way, the user can select a picture or a video that the user likes to make a linkage animation and use the animation in the electronic device. This can improve experience of the user in setting and using a wallpaper.

## Description

This application claims priority to Chinese Patent Application No. 202111401251.7, filed with the China National Intellectual Property Administration on November 24, 2021 and entitled "DISTRIBUTED DEVICE INTERACTION MODE AND ELECTRONIC DEVICE", and to Chinese Patent Application No. 202210336382.X, filed with the China National Intellectual Property Administration on March 31, 2022 and entitled "LINKAGE ANIMATION DISPLAY METHOD AND RELATED APPARATUS", which are incorporated herein by reference in their entireties.

### TECHNICAL FIELD

This application relates to the field of terminal technologies, and in particular, to a linkage animation display method and a related apparatus.

### BACKGROUND

Currently, many electronic devices such as a mobile phone, a tablet computer, and a notebook computer can support a user in setting a wallpaper, for example, a lock screen wallpaper or a desktop wallpaper. When the electronic device is in a corresponding state, the electronic device may display the wallpaper that is set by the user. Some electronic devices can further support the user in setting always on display (always on display, AOD) content. After the electronic device is screen-off, the electronic device may display the AOD content such as an image and time. A user interface of the electronic device can be more personalized and beautiful by setting the AOD and the wallpaper.

The wallpaper may be a static wallpaper or a dynamic wallpaper. The wallpaper displayed on the electronic device may be linked to a status change of the electronic device, to present an animation effect. The animation may be, for example, an animation of water flowing, an animation of flower blooming, an animation of scene changing in four seasons, or an animation of observing a change in an angle of view of the earth. For example, in a process in which a status of the electronic device changes from an AOD state to a screen-locked state and further changes to a desktop state, the electronic device may present an animation in which a flower gradually blooms from a bud. The electronic device may display the bud in the AOD state and may display the flower in full bloom in the desktop state. The dynamic wallpaper presented in a status change process of the electronic device may be referred to as a linkage animation. The linkage animation can increase interest of the user in using the electronic device.

However, for the linkage animation, a developer usually needs to develop a design of a wallpaper designer, to obtain an application of the linkage animation. The user can use the linkage animation only after downloading the application of the linkage animation in the electronic device. Because an implementation of the linkage animation is cumbersome, the linkage animation designed by the wallpaper designer cannot be put into use quickly. In addition, the user cannot customize a picture or video that the user likes as the linkage animation. This affects experience of the user in setting the AOD and the wallpaper.

### SUMMARY

This application provides a linkage animation display method and a related apparatus. An electronic device can generate a linkage animation based on image data that is input by a user. The linkage animation may be an animation played when a status of the electronic device changes. Using the linkage animation in the electronic device can provide smooth visual experience for the user in a status change process of the electronic device. In the foregoing method, the user can make a linkage animation based on a picture or a video that the user likes, and use the linkage animation in the electronic device, to improve experience of the user in setting and using a wallpaper.

According to a first aspect, this application provides a linkage animation display method. The electronic device receives a first input and a first operation, where the first operation is used to generate a linkage animation based on the first input, the first input includes first image data, and the first image data includes one or more pictures, one or more videos, or a combination of a picture and a video. The electronic device generates a first linkage animation based on the first operation and the first input, where the first linkage animation is played when a status of the electronic device changes.

It can be learned from the foregoing method that the electronic device may generate a linkage animation based on a picture and/or a video input by a user. When using the linkage animation, the electronic device can play the linkage animation when the status changes (for example, from an AOD state to a screen-locked state, or from a screen-locked state to a desktop state). This can provide smooth visual experience for the user in a status change process of the electronic device. In the foregoing method, the user can make a linkage animation based on a picture or a video that the user likes. This improves experience of the user in setting a wallpaper in the electronic device.

In addition, a wallpaper designer can input image data designed by the wallpaper designer into the electronic device. The electronic device may directly convert, by the foregoing method, content designed by the wallpaper designer into a linkage animation that can be downloaded and used by the user. To be specific, the wallpaper designer does not need to give design content designed by the wallpaper designer to a developer to develop, by the developer according to a linkage animation development specification, the linkage animation that can be downloaded and used by the user. The foregoing method can simplify a design-to-use process of the linkage animation. The wallpaper designer can quickly put a linkage animation designed by the wallpaper designer into use.

With reference to the first aspect, in some embodiments, a linkage animation used by the electronic device is the first linkage animation. The electronic device receives a second operation, where the second operation is used to trigger the electronic device to enter a second state from a first state. The electronic device obtains a first animation segment from the first linkage animation in response to the second operation. The electronic device plays the first animation segment when entering the second state from the first state.

It can be seen that the user may use the linkage animation made by the user in the electronic device. This can improve experience of the user in setting and using a wallpaper.

With reference to the first aspect, in some embodiments, the first linkage animation includes a plurality of animation segments. The electronic device detects that the electronic device enters the first state from the second state. The electronic device obtains a second animation segment from the first linkage animation. The second animation segment is different from the first animation segment. The electronic device plays the second animation segment when entering the first state from the second state.

In some embodiments, the second animation segment may be an animation segment of the first animation segment that is reverse-process played.

In other words, when status changes of the electronic devices are inverse processes for each other, animation segments played by the electronic device when the status changes may also be animation segments that are inverse-process played for each other. For example, the first animation segment presents a scene in which a flower blooms. The second animation segment may present a scene in which the flower is closed.

With reference to the first aspect, in some embodiments, the electronic device detects that the electronic device enters a third state from the second state. The electronic device obtains a third animation segment from the first linkage animation. The third animation segment is different from the first animation segment. The electronic device plays the third animation segment when entering the third state from the second state.

In some embodiments, a first frame of picture of the third animation segment may be the same as a last frame of picture of the first animation segment. Alternatively, in some embodiments, a first frame of picture of the third animation segment and a last frame of picture of the first animation segment each may include one or more same elements, and a position and a size that are of the one or more same elements and that are displayed in the first frame of picture of the third animation segment respectively differentiate from a position and a size that are of the one or more same elements and that are displayed in the last frame of picture of the first animation segment by a preset value. Content displayed in the first frame of picture of the third animation segment may be similar to content displayed in the last frame of picture of the first animation segment. In this way, the third animation segment and the first animation segment may be coherent.

In other words, the second state may be an intermediate state in which the electronic device enters the third state from the first state. An animation segment played when the electronic device enters the second state from the first state and an animation segment played when the electronic device enters the third state from the second state are coherent, so that the user can have smoother visual experience. For example, the first animation segment may present a scene in which the flower changes from a completely closed state to a partial bloom state. The third animation segment may present a scene in which the flower changes from the partial bloom state to a full bloom state.

With reference to the first aspect, in some embodiments, the status of the electronic device includes: any plurality of an always on display state, a screen-locked state, and a desktop state; or a screen-folded state of a folding screen and a screen-unfolded state of the folding screen; or a screen-folded state of a folding screen, a screen-unfolded state of the folding screen, an always on display state, a screen-locked state, and a desktop state.

For example, the status change process of the electronic device may include any one of the following: entering the screen-locked state from the always on display state, entering the always on display state from the screen-locked state, entering the desktop state from the screen-locked state, entering the screen-locked state from the desktop state, entering the desktop state from the always on display state, and enter the always on display state from the desktop state. For another example, the electronic device is an electronic device having a folding screen. The status change process of the electronic device may include any one of the following: entering from the screen-folded state of the folding screen to the screen-unfolded state of the folding screen, and entering from the screen-unfolded state of the folding screen to the screen-folded state of the folding screen. For another example, the electronic device is an electronic device having a folding screen. After the folding screen of the electronic device is expanded, always on display content may be displayed. That is, the electronic device may directly enter the always on display state from the screen-unfolded state of the folding screen. After the folding screen of the electronic device is expanded, a lock screen interface may also be displayed. That is, the electronic device may directly enter the screen-locked state from the screen-unfolded state of the folding screen. The status change process of the electronic device may include any one of the following: entering the screen-unfolded state of the folding screen from the screen-folded state of the folding screen, entering the screen-folded state of the folding screen from the screen-unfolded state of the folding screen, entering the always on display state from the screen-unfolded state of the folding screen, entering the screen-locked state from the screen-unfolded state of the folding screen, entering the desktop state from the screen-unfolded state of the folding screen, entering the screen-folded state of the folding screen from the desktop state, entering the screen-folded state of the folding screen from the screen-locked state, and entering the screen-folded state of the folding screen from the always on display state. The status change process is a process of changing any two states among the always on display state, the screen-locked state, and the desktop state.

With reference to the first aspect, in some embodiments, the electronic device includes N1 states, and N1 is an integer greater than 1. That the electronic device generates the first linkage animation based on the first operation and the first input may be specifically as follows: The electronic device obtains, based on the first operation and the first image data, image data for playing the first linkage animation, where the image data for playing the first linkage animation includes N2 partial pictures and N1 node pictures, one partial picture in the N2 partial pictures is a picture that presents one or more elements included in the first image data, the N1 node pictures are pictures respectively displayed by the electronic device in the N1 states, and N2 is a positive integer. The electronic device determines, based on the N2 partial pictures and the N1 node pictures, an animation effect that is of an element included in the first image data and that is presented when the electronic device enters another state from one state in the N1 states, to obtain the first linkage animation.

With reference to the first aspect, in some embodiments, the first linkage animation has a first theme package. The first theme package includes the N2 partial pictures, the N1 node pictures, and a first description file. The animation effect that is of the element included in the first image data and that is presented when the electronic device enters the another state from the one state in the N1 states is defined in the first description file. The first theme package is used by the electronic device to obtain, in a case in which the electronic device uses the first linkage animation, an animation segment that is in the first linkage animation and that is played when the status of the electronic device changes.

It can be learned from the foregoing embodiment that the electronic device may generate the first theme package of the first linkage animation based on the first image data that is input by the user. When the first linkage animation is the linkage animation used by the electronic device, the electronic device may parse, in response to an operation of changing the status of the electronic device, the first theme package of the first linkage animation based on an animation effect algorithm library, to obtain an animation segment played when the status of the electronic device changes. The animation effect algorithm library may include program code for implementing a plurality of animation effects. Then, when the status changes, the electronic device may play the animation segment obtained by parsing the first theme package.

For example, in response to the operation of triggering the electronic device to enter the second state from the first state, the electronic device may parse the first theme package to obtain the first animation segment. In response to an operation of triggering the electronic device to enter the first state from the second state, the electronic device may parse the first theme package to obtain the second animation segment. In response to an operation of triggering the electronic device to enter the third state from the second state, the electronic device may parse the first theme package to obtain the third animation segment.

In addition to the first theme package, theme packages of a plurality of linkage animations may be parsed based on the animation effect algorithm library, to obtain an animation segment that is in the linkage animation and that corresponds to the status change process of the electronic device. Compared with a manner in which each time a linkage animation is used, an application corresponding to the linkage animation needs to be downloaded and the application needs to be run to display the linkage animation, the foregoing manner of parsing the theme package of the linkage animation is simpler, and requires less running space. In addition, a theme package of a linkage animation usually occupies less memory than an application corresponding to the linkage animation. The theme package of the linkage animation can effectively reduce storage space and running space of the electronic device.

With reference to the first aspect, in some embodiments, the first image data is a first picture. A method for determining, by the electronic device, the animation effect that is of the element included in the first image data and that is presented when the electronic device enters the another state from the one state in the N1 states, to obtain the first linkage animation may be as follows: The electronic device adjusts, in the first picture based on the N2 partial pictures, a position and/or a size of an element included in the first picture, to obtain a plurality of pictures included in the first linkage animation. Positions and/or sizes of the element that is included in the first picture and that is displayed in the plurality of pictures are different. A position and a size of the element that is included in the first picture and that is displayed in a first frame of picture of a fourth animation segment are respectively determined based on a position and a size of the element that is included in the first picture and that is displayed by the electronic device in a node picture corresponding to the one state. The fourth animation segment is a linkage animation played when the electronic device enters the another state from the one state in the N1 states. A position and a size of the element that is included in the first picture and that is displayed in a last frame of picture of the fourth animation segment are respectively determined based on a position and a size of the element that is included in the first picture and that is displayed by the electronic device in a node picture corresponding to the another state.

With reference to the first aspect, in some embodiments, the first image data is a first video, and the N2 partial pictures include pictures that present different changing postures of an element in the first video. A method for determining, by the electronic device, the animation effect that is of the element included in the first image data and that is presented when the electronic device enters the another state from the one state in the N1 states, to obtain the first linkage animation may be as follows: The electronic device sets, based on the N2 partial pictures, a posture change process of the element included in the first video, to obtain a plurality of pictures included in the first linkage animation. Postures that are of the element included in the first video and that are displayed in the plurality of pictures are different. A posture that is of the element included in the first video and that is displayed in a first frame of picture of a fourth animation segment is determined based on a posture that is of the element included in the first video and that is displayed by the electronic device in a node picture corresponding to the one state. The fourth animation segment is a linkage animation played when the electronic device enters the another state from the one state in the N1 states. A posture that is of the element included in the first video and that is displayed in a last frame of picture of the fourth animation segment is determined based on a posture that is of the element included in the first video and that is displayed by the electronic device in a node picture corresponding to the another state.

With reference to the first aspect, in some embodiments, the first input further includes a first parameter. The first parameter includes one or more of the following: an image included in the first linkage animation, an animation effect included in the first linkage animation, and a frame rate of playing the first linkage animation. The first input parameter can facilitate the wallpaper designer to make a more exquisite linkage animation through a more professional and refined design.

With reference to the first aspect, in some embodiments, the first state is the always on display state or the desktop state, the second state is the screen-locked state, and the electronic device displays, on an interface displayed when the electronic device is in the first state, one picture or one animation segment included in the first linkage animation. After playing the first animation segment, the electronic device may display a lock screen interface. A lock screen wallpaper and an upper-layer element of the wallpaper in the screen-locked state are displayed on the lock screen interface. The lock screen wallpaper is one picture or one animation segment included in the first linkage animation.

It can be learned from the foregoing embodiment that when entering the screen-locked state from the always on display state or the desktop state, the electronic device can play the first animation segment in the first linkage animation. When the electronic device is in the always on display state or the desktop state, always on display content or a desktop wallpaper displayed by the electronic device may be the one picture in the first linkage animation or the one animation segment in the first linkage animation. That is, the always on display content or the desktop wallpaper displayed by the electronic device before the status changes to the screen-locked state is related to the first animation segment. When detecting an operation of triggering the electronic device to enter the screen-locked state, the electronic device may start to play the first animation segment. Content of the first animation segment may be played completely after the electronic device has entered the screen-locked state. When the first animation segment is played completely, the electronic device is already in the screen-locked state. A lock screen wallpaper displayed by the electronic device in the screen-locked state may be the one picture or the one animation segment in the first linkage animation. That is, a lock screen wallpaper displayed by the electronic device after the status changes to the screen-locked state is related to the first animation segment. In this way, the user triggers a status change of the electronic device, and can view a linkage animation associated with the status change. This gives user experience of a smoother status change process of the electronic device, and increases interest of the user in changing the status of the electronic device.

With reference to the first aspect, in some embodiments, the first state is the always on display state or the screen-locked state, the second state is the desktop state, and the electronic device displays, on an interface displayed when the electronic device is in the first state, one picture or one animation segment included in the first linkage animation. After playing the first animation segment, the electronic device may display a desktop. A desktop wallpaper and an upper-layer element of the wallpaper in the desktop state are displayed on the desktop. The desktop wallpaper is one picture or one animation segment included in the first linkage animation.

It can be learned from the foregoing embodiment that when entering the desktop state from the always on display state or the screen-locked state, the electronic device can play the first animation segment in the first linkage animation. When the electronic device is in the always on display state or the screen-locked state, always on display content or a lock screen wallpaper displayed by the electronic device may be the one picture in the first linkage animation or the one animation segment in the first linkage animation. That is, the always on display content or the lock screen wallpaper displayed by the electronic device before the status changes to the desktop state is related to the first animation segment. When detecting an operation of triggering the electronic device to enter the desktop state, the electronic device may start to play the first animation segment. Content of the first animation segment may be played completely after the electronic device has entered the desktop state. When the first animation segment is played completely, the electronic device is already in the desktop state. A desktop wallpaper displayed by the electronic device in the desktop state may be the one picture or the one animation segment in the first linkage animation. That is, a desktop wallpaper displayed by the electronic device after the status changes to the desktop state is related to the first animation segment. In this way, the user triggers a status change of the electronic device, and can view a linkage animation associated with the status change. This gives user experience of a smoother status change process of the electronic device, and increases interest of the user in changing the status of the electronic device.

In some embodiments, the desktop state may include a state of displaying a desktop after the electronic device is unlocked, and may further include a state of displaying a user interface of a specified APP after the electronic device is unlocked. The user interface of the specified APP may be a user interface finally displayed before the electronic device is screen-locked and/or screen-off last time. The desktop may be a user interface configured to display an application icon of the APP.

In this case, when the user interface displayed before the electronic device is screen-locked and/or screen-off last time is the user interface of the specified APP, the electronic device may display the user interface of the specified APP after playing the first animation segment.

With reference to the first aspect, in some embodiments, the first state is the screen-locked state or the desktop state, the second state is the always on display state, and the electronic device displays, on an interface displayed when the electronic device is in the first state, one picture or one animation segment included in the first linkage animation. After playing the first animation segment, the electronic device may display an always on display interface. The one picture or the one animation segment included in the first linkage animation is displayed on the always on display interface.

It can be learned from the foregoing embodiment that when entering the always on display state from the screen-locked state or the desktop state, the electronic device can play the first animation segment in the first linkage animation. When the electronic device is in the screen-locked state or the desktop state, a lock screen wallpaper or a desktop wallpaper displayed by the electronic device may be the one picture in the first linkage animation or the one animation segment in the first linkage animation. That is, the lock screen wallpaper or the desktop wallpaper displayed by the electronic device before the status changes to the always on display state is related to the first animation segment. When detecting an operation of triggering the electronic device to enter the always on display state, the electronic device may start to play the first animation segment. When the first animation segment is played completely, the electronic device is in the always on display state. Always on display content displayed by the electronic device in the always on display state may be the one picture or the one animation segment in the first linkage animation. That is, the always on display content displayed by the electronic device after the status changes to the always on display state is related to the first animation segment. In this way, the user triggers a status change of the electronic device, and can view a linkage animation associated with the status change. This gives user experience of a smoother status change process of the electronic device, and increases interest of the user in changing the status of the electronic device.

With reference to the first aspect, in some embodiments, the electronic device receives an operation of uploading the first linkage animation to a first server, and uploads the first linkage animation to the first server. The first server may be a server at a theme application side.

For example, the wallpaper designer may upload a theme package of a linkage animation made by the wallpaper designer to the first server. After the theme package is approved, the user may download the theme package of the theme application from the theme application, and use the theme package in the electronic device.

The foregoing method can simplify a design-to-use process of the linkage animation. The wallpaper designer can quickly put a linkage animation designed by the wallpaper designer into use.

With reference to the first aspect, in some embodiments, the electronic device receives a third operation and downloads a second linkage animation from the first server. The electronic device changes the linkage animation used by the electronic device from the first linkage animation to the second linkage animation, to play the second linkage animation when the status of the electronic device changes. The electronic device may download a theme package of the second linkage animation from the first server. During use of the second linkage animation, the electronic device may parse the theme package of the second linkage animation, to obtain an animation segment corresponding to the status change of the electronic device.

According to a second aspect, this application provides an electronic device. The electronic device may include a communication apparatus, a memory, and a processor. The memory is configured to store a computer program, and the processor is configured to invoke the computer program, to enable the electronic device to perform any possible implementation according to the first aspect.

According to a third aspect, this application provides a computer-readable storage medium, including instructions. When the instructions are run on an electronic device, the electronic device is enabled to perform any possible implementation according to the first aspect.

According to a fourth aspect, this application provides a computer program product. The computer program product may include computer instructions. When the computer instructions are run on an electronic device, the electronic device is enabled to perform any possible implementation according to the first aspect.

According to a fifth aspect, this application provides a chip. The chip is used in an electronic device. The chip includes one or more processors. The processor is configured to invoke computer instructions, to enable the electronic device to perform any possible implementation according to the first aspect.

It may be understood that the electronic device provided in the second aspect, the computer-readable storage medium provided in the third aspect, the computer program product provided in the fourth aspect, and the chip provided in the fifth aspect are all used to perform the method provided in embodiments of this application. Therefore, for beneficial effects that can be achieved, refer to beneficial effects in a corresponding method. Details are not described herein again.

### BRIEF DESCRIPTION OF DRAWINGS

FIG. 1A to FIG. 1G are schematic diagrams of linkage animation display according to an embodiment of this application;
FIG. 2 is a schematic diagram of an image included in a linkage animation according to an embodiment of this application;
FIG. 3 is an architectural diagram of a communication system according to an embodiment of this application;
FIG. 4A is a schematic diagram of a structure of an electronic device 100 according to an embodiment of this application;
FIG. 4B is a block diagram of a software structure of an electronic device 100 according to an embodiment of this application;
FIG. 5 is a schematic diagram of an image layer included on a user interface according to an embodiment of this application;
FIG. 6A to FIG. 6G are schematic diagrams of some scenarios of customized linkage animations according to an embodiment of this application;
FIG. 7A and FIG. 7B are schematic diagrams of a process of making a linkage animation according to an embodiment of this application;
FIG. 8 is a schematic diagram of displaying some linkage animation images according to an embodiment of this application;
FIG. 9A to FIG. 9D are schematic diagrams of a scenario in which a linkage animation is set in an electronic device 100 according to an embodiment of this application;
FIG. 10A and FIG. 10B are a flowchart of a linkage animation display method according to an embodiment of this application; and
FIG. 11 is a flowchart of a display method of another linkage animation according to an embodiment of this application.

### DESCRIPTION OF EMBODIMENTS

The following describes the technical solutions in embodiments of this application with reference to the accompanying drawings in embodiments of this application. In the descriptions of embodiments of this application, the terms used in the following embodiments are merely intended to describe purposes of specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that, in the following embodiments of this application, "at least one" and "one or more" mean one, two, or more. The term "and/or" is used for describing an association relationship between associated objects, and indicates that three relationships may exist. For example, A and/or B may represent: Only A exists, both A and B exist, and only B exists, where A and B may be singular or plural. The character "/" generally represents an "or" relationship between the associated objects.

Reference to "one embodiment" or "some embodiments" described in this specification means that a specific characteristic, structure or feature described in combination with embodiments is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the terms "example", "for example", or the like is used to represent giving an example, an illustration, or a description. In embodiments of this application, any embodiment or design solution described as "example" or "for example" shall not be explained as being more preferred or advantageous than other embodiments or design solutions. Specifically, use of the words "example" and "for example" is intended to present a related concept in a specific way.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a Widget that is displayed on a display of the electronic device.

For ease of understanding, a concept related to a "linkage animation" in this application is first described herein.

The linkage animation may be an animation displayed by linking to a status change process of an electronic device. In this way, in a process in which the electronic device changes from one state to another state, content displayed by the electronic device appears to be continuous. A status of the electronic device may include an AOD state, a screen-locked state, a desktop state, a screen-folded state of a folding screen, a screen-unfolded state of the folding screen, and the like. The screen-locked state may be a state in which the electronic device is screen-locked. The desktop state may be a state in which a desktop is displayed after the electronic device is unlocked. An icon of an application installed on the electronic device may be displayed on the desktop of the electronic device. When the electronic device is in the screen-locked state, the electronic device may enter the desktop state after being unlocked (for example, numerical password unlocking, face unlocking, or fingerprint unlocking). The status of the electronic device is not limited in embodiments of this application.

The linkage animation may closely associate content displayed by the electronic device with a status change of the electronic device. A user triggers the status change of the electronic device, and can view a linkage animation associated with the status change. This gives user experience of a smoother status change process of the electronic device, and increases interest of the user in changing the status of the electronic device.

The linkage animation may also be referred to as a linkage wallpaper or the like. A name of the linkage animation is not limited in embodiments of this application.

The linkage animation may include a super wallpaper.

The super wallpaper may be an animation displayed by linking a process in which an electronic device performs switching between any two of an AOD state, a screen-locked state, and a desktop state. For example, when the electronic device uses the super wallpaper, in a process in which the electronic device changes from the AOD state to the desktop state, the wallpaper displayed by the electronic device appears to be continuously changing (for example, a continuous change process in which a flower is in full bloom from a bud). Content of the last frame of AOD displayed when the electronic device exits from the AOD state may be associated with the first frame of wallpaper displayed when the electronic device enters the desktop state (for example, a same image, or two adjacent frames of image in a continuous animation).

It can be learned from status setting of the electronic device that the electronic device may directly enter the screen-locked state from the AOD state, or may directly enter the AOD state from the screen-locked state. For example, when the electronic device is in the AOD state, the electronic device may enter the screen-locked state from the AOD state in response to a screen-on operation (for example, an operation of tapping a power button, a double-tap operation, or a wrist raising operation by holding the electronic device in a hand). The electronic device may directly enter the desktop state from the screen-locked state, or may directly enter the screen-locked state from the desktop state. For example, when the electronic device is in the screen-locked state, the electronic device may enter the desktop state from the screen-locked state in response to an operation of unlocking the electronic device (for example, a password unlocking operation, a face unlocking operation, and a fingerprint unlocking operation).

It may be understood that the electronic device may enter the desktop state from the AOD state through the screen-locked state or enter the AOD state from the desktop state through the screen-locked state. For example, the electronic device enables a raise-to-wake function and a face unlocking function. When the electronic device is in the AOD state, the electronic device may enter the screen-locked state from the AOD state in response to a detected wrist lifting operation. Further, the electronic device may perform facial verification. After the facial verification succeeds, the electronic device is unlocked to enter the desktop state from the screen-locked state. In other words, when the electronic device is in the AOD state, the user picks up a mobile phone, performs the wrist lifting operation, and faces a screen of the electronic device toward a face of the user. This can implement a process in which the electronic device enters the screen-locked state from the AOD state, and further enters the desktop state.

**The following describes a display scenario of a super wallpaper by using an example in which the electronic device enters the desktop state from the AOD state.**

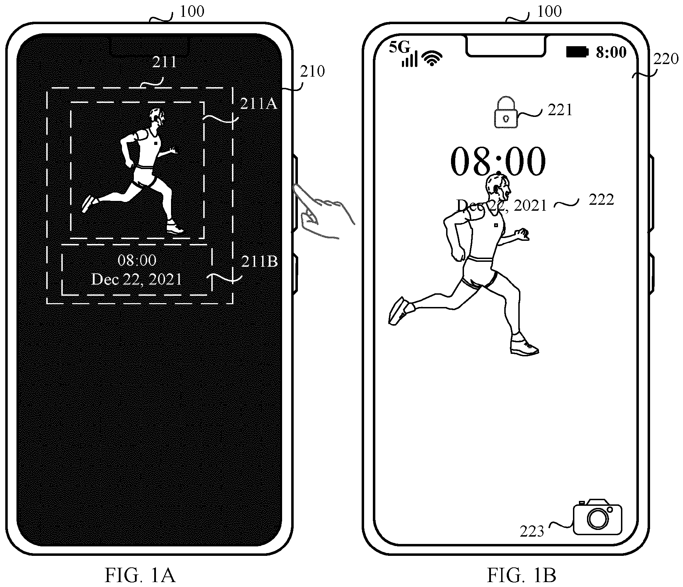

FIG. 1A to FIG. 1G show examples of a display scenario of the super wallpaper.
(1) An electronic device 100 enters the screen-locked state from the AOD state.

As shown in FIG. 1A, the electronic device 100 may display a user interface 210 in the AOD state. The user interface 210 may include an AOD region 211. The AOD region 211 may be used to display AOD content. For example, the AOD region 211 may include an AOD image display region 211A and a time display region 211B.

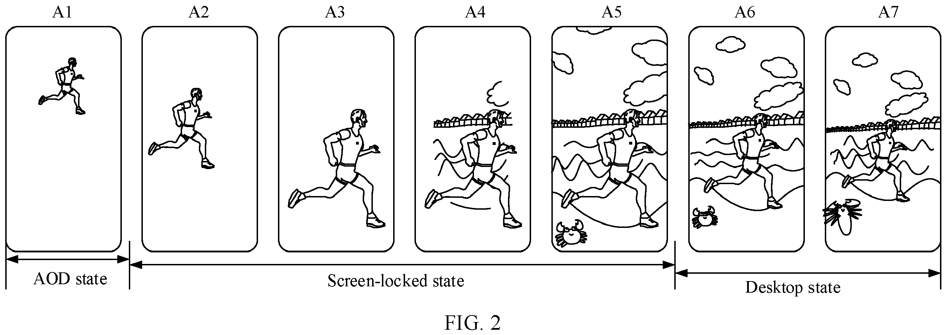

The AOD image display region 211A may be used to display an AOD image. The AOD image may be an image A1 shown in FIG. 2. The AOD image may be a moving person. The AOD image displayed in the AOD image display region 211A may be a static AOD image shown in FIG. 1A, and also be a dynamic image. For example, in the AOD state, an animation in which the moving person is running may be played in the AOD image display region 211A.

Time information may be displayed in the time display region 211B. The time information may vary with current time.

Content displayed in the AOD region 211 is not limited in embodiments of this application.

In some embodiments, after detecting a screen-off operation (for example, an operation of tapping a power button), the electronic device 100 may be screen-off, and some pixels on the screen are lightened to display the AOD content (for example, the AOD image and the time information). In some other embodiments, after detecting a screen-off operation, the electronic device 100 may display the AOD content on the screen, and display, in black, a pixel of a region other than the AOD content on the screen. A method for implementing AOD by the electronic device 100 is not limited in embodiments of this application.

The electronic device 100 may enter the screen-locked state from the AOD state in response to the screen-on operation of the user, for example, the operation, shown in FIG. 1A, of tapping the power button.

FIG. 1B to FIG. 1E show examples of a wallpaper change process in a process in which the electronic device 100 enters the screen-locked state from the AOD state.

As shown in FIG. 1B, the electronic device 100 may display a user interface 220. The user interface 220 may be a user interface displayed at time ta1 after the electronic device 100 enters the screen-locked state. A lock identifier 221, time 222, a camera control 223 may be included on the user interface 220. The lock identifier 221 may indicate that the electronic device 100 is in a locked state. The time 222 may indicate current time. The camera control 223 may be configured to invoke a camera application of the electronic device 100.

A wallpaper may be displayed on the user interface 220. The wallpaper may be an image A2 shown in FIG. 2. It can be learned by comparing the image A1 with the image A2 that the moving person included in the image A1 and a moving person included in the image A2 are a same person. The moving person in the image A1 is different from the moving person in the image A2 in size. For example, a display position of the moving person in the image A1 is different from a display position of the moving person in the image A2. That is, the image A1 and the image A2 may give user experience of observing the moving person from different angles and different distances.

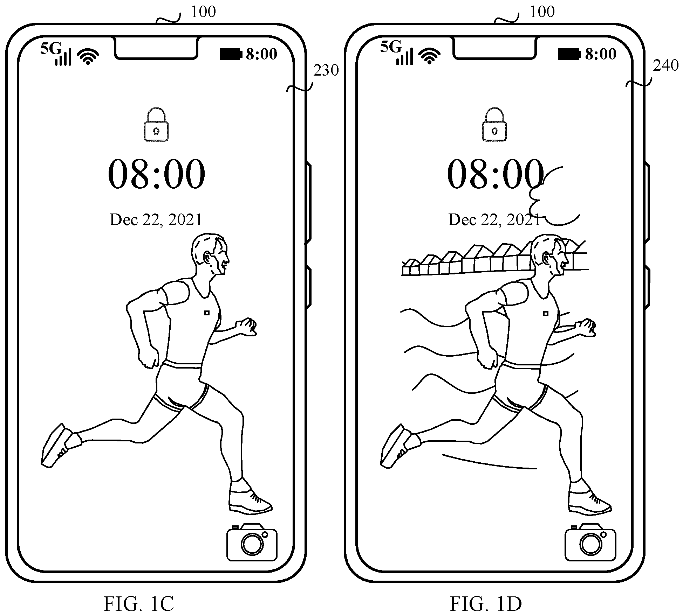

After the time ta1, the electronic device 100 may display a user interface 230 shown in FIG. 1C. The user interface 230 may be a user interface displayed at time ta2 after the electronic device 100 enters the screen-locked state. A wallpaper may be displayed on the user interface 230. The wallpaper may be an image A3 shown in FIG. 2. It can be learned by comparing the image A2 with the image A3 that the moving person included in the image A2 and a moving person included in the image A3 are a same person. The moving person in the image A2 is different from the moving person in the image A3 in size. The display position of the moving person in the image A2 is different from a display position of the moving person in the image A3. That is, the image A2 and the image A3 may give user experience of observing the moving person from different angles and different distances.

After the time ta2, the electronic device 100 may display a user interface 240 shown in FIG. 1D. The user interface 240 may be a user interface displayed at time ta3 after the electronic device 100 enters the screen-locked state. A wallpaper may be displayed on the user interface 240. The wallpaper may be an image A4 shown in FIG. 2. It can be learned by comparing the image A3 with the image A4 that the moving person included in the image A3 and a moving person included in the image A4 are a same person. Display content of a movement scene in which the moving person is located is not included in the image A3. The display content of the movement scene in which the moving person is located is included in the image A4. That is, the image A3 and the image A4 may give user experience of gradually observing the movement scene in which the moving person is located.

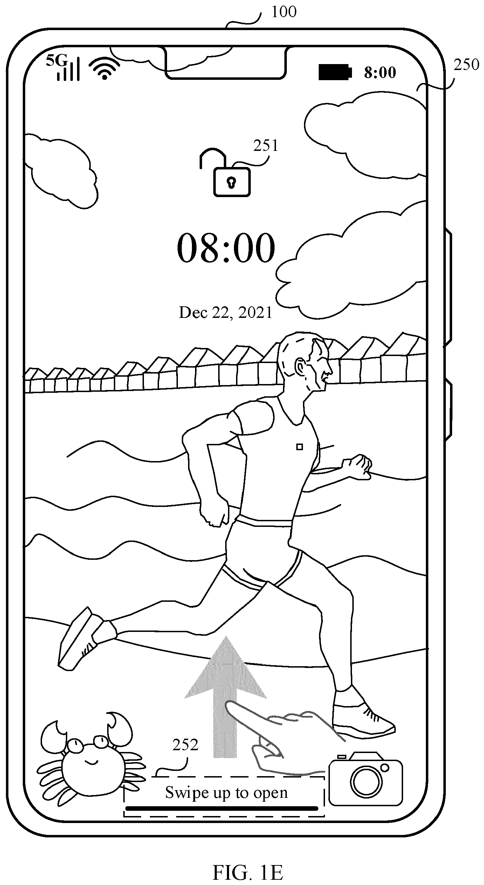

After the time ta3, the electronic device 100 may display a user interface 250 shown in FIG. 1E. The user interface 250 may be a user interface displayed at time ta4 after the electronic device 100 enters the screen-locked state. A wallpaper may be displayed on the user interface 250. The wallpaper may be an image A5 shown in FIG. 2. It can be learned by comparing the image A4 with the image A5 that the moving person included in the image A4 and a moving person included in the image A5 are a same person. The display content of the movement scene in which the moving person is located in the image A4 is fewer than display content of a movement scene in which the moving person is located in the image A5. That is, the image A4 and the image A5 may give user experience of gradually observing the movement scene in which the moving person is located.

An unlock identifier 251 and desktop entry prompt information 252 may be further included on the user interface 250. The unlock identifier 251 may indicate that the electronic device 100 has been unlocked. The desktop entry prompt information 252 may give the user a prompt of entering the desktop state from the screen-locked state. For example, the desktop entry prompt information 252 may include a text prompt "Swipe up to open". When the electronic device 100 is unlocked, the user may trigger the electronic device 100 to enter the desktop state by sliding upward from the bottom of the electronic device 100.

It can be learned from scenarios shown in FIG. 1A to FIG. 1E and the image A1 to the image A5 in FIG. 2 that, in a process in which the electronic device 100 enters the screen-locked state from the AOD state, the electronic device 100 may play the image A1 to the image A5 based on a time sequence. The image A1 to the image A5 are associated. For example, moving persons included in the image A1 to the image A5 are a same person. In a process in which the electronic device 100 plays the image A1 to the image A5, the user may see a process in which the moving person gradually moves from the position shown in the image A1 to a position shown in the image A5, a size of the moving person gradually changes from the size shown in the image A1 to a size shown in the image A5, a movement scene of the moving person is gradually presented.

In some embodiments, the electronic device 100 enables the face unlocking function. In response to the screen-on operation shown in FIG. 1A, the electronic device 100 may further collect face data, and perform face verification based on the face data. After the face verification succeeds, the electronic device 100 may be unlocked, and display the unlock identifier 251 and the desktop entry prompt information 252 that are shown in FIG. 1E.

In some embodiments, the electronic device 100 enables a fingerprint unlocking function. In the processes in FIG. 1A to FIG. 1E, the electronic device 100 collects fingerprint data by using a fingerprint sensor, and performs fingerprint verification based on the fingerprint data. After the fingerprint verification succeeds, the electronic device 100 may be unlocked, and display the unlock identifier 251 and the desktop entry prompt information 252 that are shown in FIG. 1E.

In some embodiments, regardless of whether the electronic device 100 is unlocked, when the electronic device 100 is in the screen-locked state, after completing playing of an animation that is linked to a change process of changing from the AOD state to the screen-locked state, the electronic device 100 may allow a wallpaper displayed on a user interface to rest in a last frame of image of the animation (for example, the image A5 shown in FIG. 2). In other words, if the electronic device 100 is not unlocked, after completing playing of the image A1 to the image A5, the electronic device 100 may display the lock identifier 221 on the user interface, and display the image A5 as a static wallpaper. If the electronic device 100 is unlocked, but an operation of entering a desktop (for example, the operation of sliding upward from the bottom of the electronic device 100) is not received, the electronic device 100 may display the unlock identifier 251 on the user interface after being unlocked, and display the image A5 as a static wallpaper after completing playing of the image A1 to the image A5.

In some embodiments, regardless of whether the electronic device 100 is unlocked, when the electronic device 100 is in the screen-locked state, the electronic device 100 may cyclically play an animation that is linked to a change process of changing from the AOD state to the screen-locked state (for example, an animation, shown in FIG. 2, formed by the image A1 to the image A5).

In some embodiments, in a process of playing the animation that is linked to the change process of changing from the AOD state to the screen-locked state, the electronic device 100 may further respond to a user operation and pause playing of the animation.

A wallpaper display method in which the electronic device 100 is in the screen-locked state is not limited in embodiments of this application.

(2) The electronic device 100 enters the desktop state from the screen-locked state.

It can be learned from FIG. 1E that the electronic device 100 has been unlocked. The electronic device 100 may enter the desktop state from the screen-locked state in response to the operation, shown in FIG. 1E, of sliding upward from the bottom of the electronic device 100.

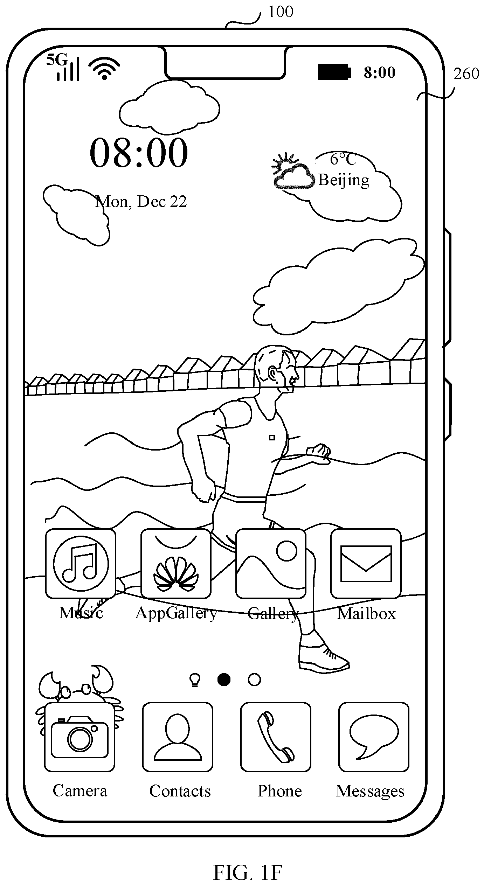

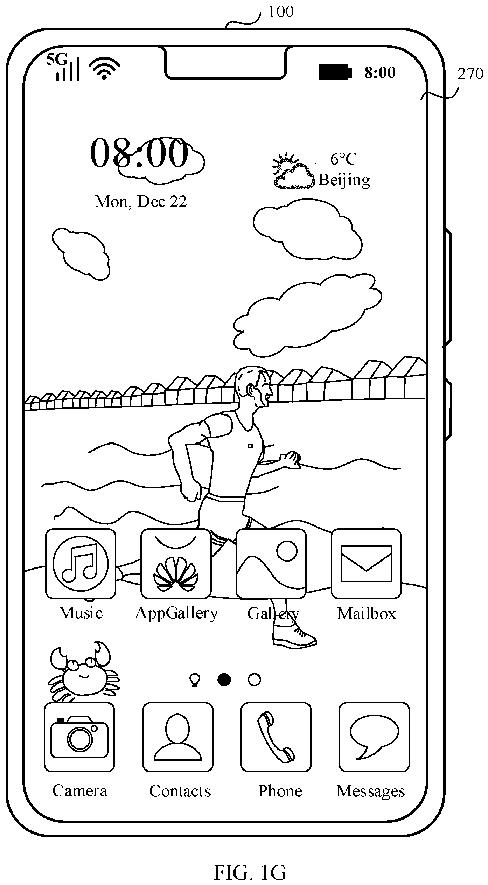

FIG. 1F and FIG. 1G show examples of a wallpaper change process in a process in which the electronic device 100 enters the desktop state from the screen-locked state.

As shown in FIG. 1F, the electronic device 100 may display a user interface 260. The user interface 260 may be a desktop of the electronic device 100. The user interface 260 may be a user interface displayed at time ta5 after the electronic device 100 enters the desktop state. The time ta5 is later than the time ta4 at which the user interface 250 shown in FIG. 1E is displayed. It can be learned that an icon of an application installed on the electronic device 100 may be displayed on the user interface 260, for example, a camera application icon, a contact application icon, or a phone application icon. A wallpaper may be further displayed on the user interface 260. The wallpaper may be an image A6 shown in FIG. 2. It can be learned by comparing the image A5 with the image A6 that the moving person included in the image A5 and a moving person included in the image A6 are a same person. The moving person in the image A5 is larger than the moving person in the image A6 in size. The display content of the movement scene in which the moving person is located in the image A5 is fewer than display content of a movement scene in which the moving person is located in the image A6. That is, the image A5 and the image A6 may give user experience of moving away from the moving person.

After the time ta5, the electronic device 100 may display a user interface 270 shown in FIG. 1G. The user interface 270 may be a desktop of the electronic device 100. The user interface 270 may be a user interface displayed at time ta6 after the electronic device 100 enters the desktop state. A wallpaper may be displayed on the user interface 270. The wallpaper may be an image A7 shown in FIG. 2. It can be learned by comparing the image A6 with the image A7 that the moving person included in the image A6 is larger than a moving person included in the image A7 in size. The display content of the movement scene in which the moving person is located in the image A6 is fewer than display content of a movement scene in which the moving person is located in the image A7. That is, the image A6 and the image A7 may give user experience of moving away from the moving person.

It can be learned from scenarios shown in FIG. 1E to FIG. 1G and the image A5 to the image A7 in FIG. 2 that, in a process in which the electronic device 100 enters the desktop state from the screen-locked state, the electronic device 100 may play the image A5 to the image A7 based on a time sequence. The image A5 to the image A7 are associated. For example, moving persons included in the image A5 to the image A7 are a same person. In a process in which the electronic device 100 plays the image A5 to the image A7, the user may see a process in which the moving person is gradually moving away.

The image A1 to the image A7 shown in FIG. 2 may form a super wallpaper. When using the super wallpaper, the electronic device 100 may play, in a process of performing switching between any two of the AOD state, the screen-locked state, and the desktop state, an animation corresponding to the super wallpaper. For example, in a process in which the electronic device 100 enters the desktop state from the AOD state, the electronic device 100 may display the image A1 to the image A7 in sequence based on scenarios shown in FIG. 1A to FIG. 1F. In this way, the user can view a continuous animation (for example, presenting an animation for viewing, from different angles, the moving person who is running) in the process in which the electronic device 100 enters the desktop state from the AOD state. The super wallpaper gives user experience of a smoother status change process of the electronic device, and increases interest of the user in changing the status of the electronic device.

In some embodiments, when the electronic device 100 is in the desktop state, after completing playing of an animation that is linked to a change process of changing from the screen-locked state to the desktop state, the electronic device 100 may allow a wallpaper displayed on a user interface to rest in a last frame of image of the animation (for example, the image A7 shown in FIG. 2). In other words, after completing playing of the image A5 to the image A7, the electronic device 100 may display the image A7 as a static wallpaper on the user interface.

In some embodiments, when the electronic device 100 is in the desktop state, the electronic device 100 may cyclically play an animation that is linked to a change process of changing from the screen-locked state to the desktop state (for example, an animation, shown in FIG. 2, formed by the image A5 to the image A7).

In some embodiments, in a process of playing the animation that is linked to the change process of changing from the screen-locked state to the desktop state, the electronic device 100 may further respond to a user operation and pause playing of the animation.

A wallpaper display method in which the electronic device 100 is in the desktop state is not limited in embodiments of this application.

It may be understood that display scenarios of the super wallpaper that are shown in FIG. 1A to FIG. 1E are merely examples for description in this application. This should not constitute any limitation on this application. In addition to the image A1 to the image A7 shown in FIG. 2, more or fewer frames of images may be further included in the animation corresponding to the super wallpaper.

The super wallpaper can further present more animation effects in use, for example, a 3D animation effect, a fluid animation effect, a time-lapse animation effect, a rotation animation effect, a scaling animation effect, and a depth-of-field change animation effect.

The super wallpaper can also be referred to as a linkage wallpaper, a long-take animation wallpaper, and the like. A name of the super wallpaper is not limited in embodiments of this application. It can be learned from the foregoing embodiments that the super wallpaper is an implementation of a linkage animation. For ease of description and understanding, the super wallpaper is specifically used as an example to describe a linkage animation display method in subsequent embodiments of this application. A person skilled in the art should understand that, for a display method of another type of linkage animation (for example, an animation displayed by linking to a process of changing a folding screen from a folded state to a fully unfolded state), refer to a display method of a super wallpaper. Details are not described in this application.

This application provides a linkage animation display method and a related apparatus. A linkage animation engine application may be installed on an electronic device. The linkage animation engine application may receive image data that is input by a user. The image data may include one or more pictures or one or more videos. The linkage animation engine application may generate a theme package of a linkage animation based on the image data. The theme package of the linkage animation may include a description file and image data for displaying the linkage animation. An animation effect in which the linkage animation is linked to one or more status change processes of the electronic device may be defined in the description file. When the linkage animation generated based on the image data that is input by the user is used, the linkage animation engine application may parse the theme package of the linkage animation in a process of detecting a status change of the electronic device, to play a corresponding animation by linking to the status change process of the electronic device.

It can be learned from the foregoing method that the user can select the one or more pictures or the one or more videos, and customize a linkage animation by using the linkage animation engine application on the electronic device. The electronic device may play, by linking to the status change process of the electronic device by using the linkage animation engine application, the linkage animation customized by the user. In this case, in addition to using a linkage animation preset in the electronic device or a linkage animation downloaded from a theme application, the user can make a linkage animation based on a picture or a video that the user likes, and use the linkage animation in the electronic device. This can improve experience of the user in setting and using a wallpaper.

The linkage animation engine application may also be referred to as a super wallpaper engine application, a super wallpaper application, a wallpaper application, or the like. A name of the linkage animation engine application is not limited in embodiments of this application.

In some embodiments, a linkage animation design application may be installed on an electronic device. The linkage animation design application may receive image data that is input by a user. The image data may include one or more pictures or one or more videos. The linkage animation engine application may generate a theme package of a linkage animation based on the image data. The theme package of the linkage animation may include a description file and image data for displaying the linkage animation. An animation effect in which the linkage animation is linked to one or more status change processes of the electronic device may be defined in the description file. The electronic device may upload the theme package of the linkage animation to a server at a theme application side by using the linkage animation design application. Then, the linkage animation may be released on the theme application to be downloaded and used by the user.

It can be learned from the foregoing method that a wallpaper designer can generate, by using the linkage animation design application, a theme package of a linkage animation designed by the wallpaper designer, and upload the theme package of the linkage animation to the server at the theme application side. A wallpaper user can download the linkage animation in the theme application of the electronic device, and use the linkage animation by using the linkage animation engine application. This can simplify a design-to-use process of the linkage animation. The wallpaper designer can quickly put a linkage animation designed by the wallpaper designer into use.

The linkage animation design application may also be referred to as a linkage animation design tool, a super wallpaper design application, a theme design application, and the like. A name of the linkage animation design application is not limited in embodiments of this application.

**The following describes a communication system provided in an embodiment of this application.**

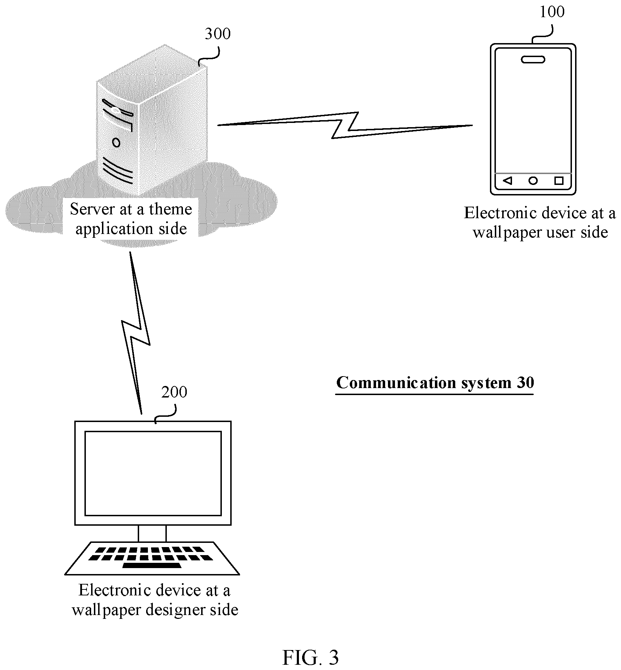

FIG. 3 is a schematic architectural diagram of an example of a communication system 30 according to this application.

As shown in FIG. 3, the communication system 30 may include an electronic device 100 at a wallpaper user side, an electronic device 200 at a wallpaper designer side, and a server 300 at a theme application side. Both the electronic device 100 and the electronic device 200 may establish a communication connection to the server 300 and communicate with the server by using cellular mobile communication such as 3G, 4G, 5G, and 6G, a wide area network (wide area network, WAN) technology, a local area network (local area network, LAN) technology, a wireless local area network (wireless LAN, WLAN) technology, or the like. The communication manner is not limited in embodiments of this application.

A theme application and a linkage animation engine application may be installed on the electronic device 100. The theme application may be configured to download theme content such as a wallpaper, a font, AOD, and an incoming call ringtone. A user may apply, to the electronic device 100, the theme content downloaded from the theme application, such as the wallpaper, the font, the AOD, and the incoming call ringtone.

In some embodiments, a wallpaper released on the theme application may include a super wallpaper designed by a wallpaper designer and developed by a developer according to a wallpaper development specification. The super wallpaper is implemented by using a super wallpaper application. When the electronic device 100 downloads the super wallpaper, the electronic device 100 may download, by using the theme application, the super wallpaper application corresponding to the super wallpaper. The electronic device 100 may obtain the super wallpaper application from the server 300 at the theme application side. When using the super wallpaper, the electronic device 100 may run the super wallpaper application corresponding to the super wallpaper, to link to a status change process of the electronic device 100 and play an animation corresponding to the super wallpaper.

In some embodiments, the wallpaper released on the theme application may include a super wallpaper designed by the wallpaper designer by using a linkage animation design application. When the electronic device 100 downloads the super wallpaper, the electronic device 100 may download a theme package of the super wallpaper by using the theme application. The theme package may include a description file and image data for displaying the super wallpaper. An animation effect in which the super wallpaper is linked to one or more status change processes of the electronic device may be defined in the description file. The electronic device 100 may obtain the theme package of the super wallpaper from the server 300 at the theme application side. When using the super wallpaper, the electronic device 100 may parse the theme package of the super wallpaper by using the linkage animation engine application, to link to the status change process of the electronic device 100 and play an animation corresponding to the super wallpaper.

The linkage animation engine application may be further configured to generate a theme package of a linkage animation by using image data (for example, a picture or a video) as an input. In this way, the user can select a picture or a video that the user likes to make the super wallpaper.

The linkage animation design application may be installed on the electronic device 200. The linkage animation design application may be configured to generate a theme package of a linkage animation by using image data (for example, a picture or a video) as an input. The electronic device 200 may upload the theme package of the linkage animation to the server 300 at the theme application side by using the linkage animation design application. The linkage animation implemented by the theme package can be released on the theme application to be downloaded and used by the user.

In some embodiments, the linkage animation design application may further include more input parameters. For example, each frame of image in a linkage animation playing process is set, an animation effect of the linkage animation is set, and a frame rate of linkage animation playing is set. The input parameter can facilitate the wallpaper designer to make a more exquisite linkage animation through a more professional and refined design.

The server (hereinafter briefly referred to as a theme server) 300 at the theme application side may be configured to store a download resource of the theme content such as the wallpaper, the font, the AOD, and the incoming call ringtone. The download resource is, for example, the super wallpaper application and the theme package of the super wallpaper. The theme server 300 may receive and store the theme package, uploaded by the electronic device 200, of the linkage animation. The theme server 300 may further send the theme package of the linkage animation to the electronic device 100 in response to a request of the electronic device 100 to obtain the theme package of the linkage animation.

The communication system 30 may further include more or fewer devices. This is not limited in embodiments of this application.

The electronic device 100 and the electronic device 200 each may be an electronic device using iOS^{®}, Android^{®}, Windows^{®}, or another operating system, for example, a mobile phone, a tablet computer, a notebook computer, a smartwatch, a smart band, a television, an ultra-mobile personal computer (ultra-mobile personal computer, UMPC), a handheld computer, a netbook, or a personal digital assistant (personal digital assistant, PDA). A specific type of the electronic device 100 and the electronic device 200 is not limited in embodiments of this application.

The following describes a structure of the electronic device 100 provided in this application.

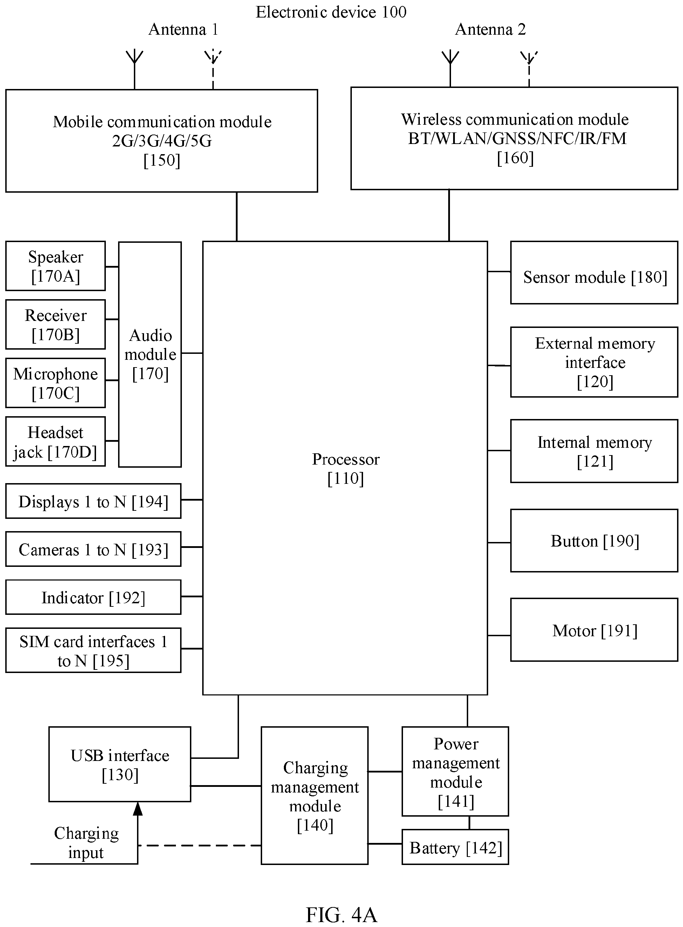

**FIG. 4A** **is a schematic diagram of an example of a structure of the electronic device 100 according to an embodiment of this application.**

As shown in FIG. 4A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or a combination of some components, or splits from some components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset.

The charging management module 140 is configured to receive a charging input from the charger. The charger may be a wireless charger or a wired charger. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave through the antenna 1 for radiation.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1. In some embodiments, when the electronic device 100 enables a face unlocking function, the electronic device 100 may collect face data by using the camera 193, and perform face verification based on the face data.

The digital signal processor is configured to process a digital signal, and may process another digital signal in addition to the digital image signal. For example, when the electronic device 100 selects a frequency, the digital signal processor is configured to perform Fourier transform and the like on frequency energy.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external storage card, for example, a microSD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: code and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The pressure sensor is configured to sense a pressure signal, and can convert the pressure signal into an electrical signal. In some embodiments, the pressure sensor may be disposed on the display 194. There are many types of pressure sensors, for example, a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device 100 determines pressure intensity based on the change in the capacitance. When a touch operation is performed on the display 194, the electronic device 100 detects a strength of the touch operation based on the pressure sensor. The electronic device 100 may also calculate a touch position based on a detection signal of the pressure sensor.

The fingerprint sensor is configured to collect a fingerprint. The electronic device 100 may use a feature of the collected fingerprint to implement fingerprint unlocking, application lock access, fingerprint-based shooting, fingerprint-based call answering, and the like.

The touch sensor is also referred to as a "touch panel". The touch sensor may be disposed on the display 194, and the touch sensor and the display 194 form a touchscreen, which is also referred to as a "touchscreen". The touch sensor is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor may alternatively be disposed on a surface of the electronic device 100 at a position different from a position of the display 194.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network by using the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an eventdriven architecture, a microkernel architecture, a micro service architecture, or a cloud architecture. In embodiments of this application, an Android system with a layered architecture is used as an example to describe a software structure of the electronic device 100.

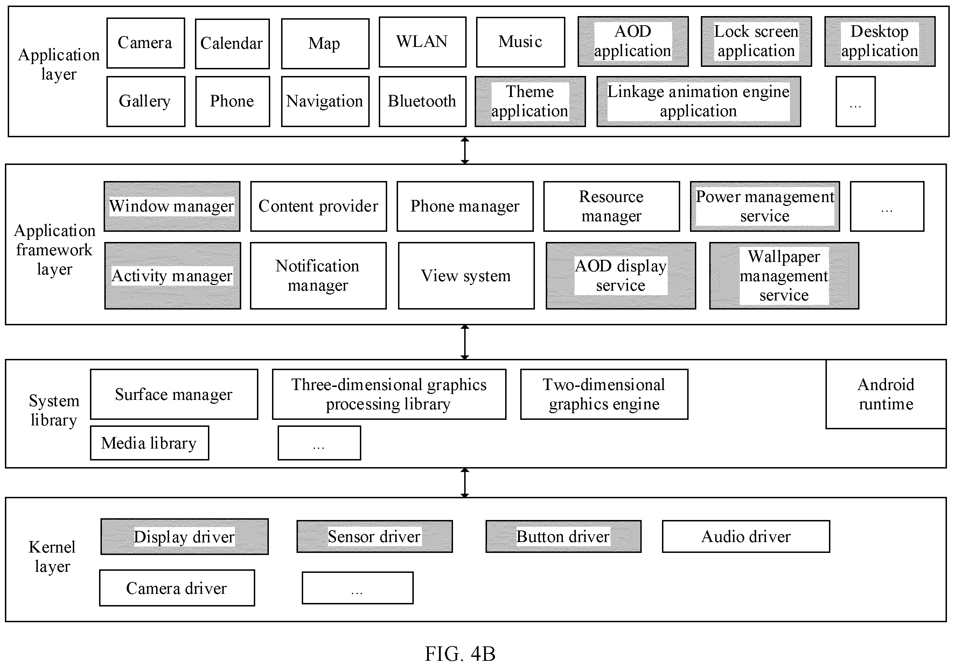

FIG. 4B is a block diagram of an example of a software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer.

The application layer may include a series of application packages.

As shown in FIG. 4B, the application packages may include applications such as Camera, Gallery, Calendar, Phone, Map, Navigation, WLAN, Bluetooth, Music, a theme application, an AOD application, a lock screen application, a desktop application, and a linkage animation engine application.

The theme application may be configured to provide a service of downloading theme content such as a wallpaper, a font, AOD, and an incoming call ringtone.

The AOD application may be configured to provide a service of displaying preset information after the electronic device 100 is screen-off. For example, the electronic device 100 enables or disables the AOD by using the AOD application. For another example, the electronic device 100 may further display, by using the AOD application, the preset information (for example, an AOD image and time information) on a screen after the electronic device is screen-off. For another example, the electronic device 100 may adjust, by using the AOD application, content displayed after the electronic device is screen-off.

The lock screen application may be configured to provide a service of locking and unlocking the electronic device 100. The lock screen application may be further configured to provide a service of displaying and managing an upper-layer element of a wallpaper in a screen-locked state. For example, the upper-layer element of the wallpaper in the screen-locked state may include a signal strength indicator of a mobile communication signal, a signal strength indicator of a wireless fidelity (wireless fidelity, Wi-Fi) signal, a battery status indicator, the lock identifier 221, the time 222, and the camera control 223, and the like that are shown in FIG. 1B. For example, the electronic device 100 may change, by using the lock screen application, a password for unlocking the electronic device 100. For another example, the electronic device 100 may adjust, by using the lock screen application, a display style of the upper-layer element of the wallpaper in the screen-locked state.

The desktop application may be configured to provide a service of displaying and managing an upper-layer element of a wallpaper in a desktop state. For example, the upper-layer element of the wallpaper in the desktop state may include a signal strength indicator of a mobile communication signal, a signal strength indicator of a Wi-Fi signal, a battery status indicator, a weather control, an icon of an application, and the like that are shown in FIG. 1F. For example, the electronic device 100 may adjust, by using the desktop application, a display position and a display style of the upper-layer element of the wallpaper in the desktop state on a desktop.

The linkage animation engine application may be configured to provide a service of receiving an image data input and generating a theme package of a linkage animation. The linkage animation engine application may be further configured to provide a service of parsing the theme package of the linkage animation and playing the linkage animation by linking to a status change process of the electronic device 100. In a possible implementation, the lock screen application may send status change information of the electronic device 100 (for example, information about a change from one status to another status, and information about status change time) to the linkage animation engine application. Then, the linkage animation engine application may parse a theme package of a currently used linkage animation, to obtain an animation that is linked to the status change process of the electronic device 100, and play the animation.

In some embodiments, an animation effect algorithm library may be integrated into the linkage animation engine application. The animation effect algorithm library may include program code for implementing a plurality of animation effects. Based on the animation effect algorithm library, the linkage animation engine application can implement playing of the linkage animation. In this way, the user can watch one or more animation effects in the status change process of the electronic device 100.

In some embodiments, the linkage animation engine application may be an application integrated into the theme application. That is, the user can start the theme application and find, in the theme application, a function entry for customizing the linkage animation.

The application framework layer provides an API and a programming framework for an application of the application layer. The application framework layer includes some predefined functions.

As shown in FIG. 4B, the application framework layer may include a window manager, an activity manager, a content provider, a notification manager, a phone manager, a view system, a resource manager, an AOD display service, a wallpaper management service, a power management service, and the like.

The window manager may be configured to manage a window program. The window manager may obtain a size of a display, determine whether there is a status bar, perform screen locking, take a screenshot, and the like. In some embodiments, the window manager may be configured to schedule an application like the desktop application. For example, based on an operation of entering the desktop state, the window manager may start the desktop application, so that the desktop application is run in the foreground of the electronic device 100. When the electronic device 100 runs the desktop application in the foreground, the electronic device 100 may display the desktop on the screen. For example, the window manager may hide the desktop application based on a screen-off operation, so that the desktop application is run in the background of the electronic device 100.

The activity manager may be configured to manage an activity (activity), and is responsible for starting, switching, and scheduling of components in a system, and management and scheduling of an application. The activity manager may be invoked by an upper-layer application to open a corresponding activity.

The content provider may be configured to: store and obtain data, and enable the data to be accessed by an application. The data may include a video, an image, an audio, calls that are made and received, a browsing history, a bookmark, a phone book, and the like.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run in the background, or a notification that appears on a screen in a form of a dialog window. For example, text information is displayed in the status bar, an announcement is given, the electronic device vibrates, or the indicator light blinks.

The phone manager is configured to provide a communication function for the electronic device 100, for example, management of a call status (including answering, declining, or the like).

The view system includes a visual control, for example, a control for displaying a text or a control for displaying a picture. The view system may be configured to construct an application. A display interface may include one or more views. For example, a display interface including a messages notification icon may include a text display view and a picture display view.

The resource manager provides various resources such as a localized character string, an icon, an image, a layout file, and a video file for an application.

The AOD display service may be configured to control display of AOD content after the electronic device 100 is screen-off. For example, the AOD display service may be configured to control a position and content of a screen-on region on an AOD interface. In some embodiments, the AOD display service may determine a position and/or content of the screen-on region on the AOD interface at a specified moment, and send the position and/or the content of the screen-on region on the AOD interface at the specified moment to the AOD application at the application layer.

The wallpaper management service may be configured to manage a wallpaper displayed in the electronic device 100. The wallpaper may include a lock screen wallpaper, a desktop wallpaper, a dynamic wallpaper displayed by linking to a status change process of the electronic device 100, and the like. The wallpaper management service may be further configured to determine wallpaper content displayed by the electronic device 100 at a specified moment.

The power management service may be configured to: manage a power supply of the electronic device 100, and trigger a screen-on event (for example, a lock screen interface and a desktop are displayed) and a screen-off event (for example, an AOD interface is displayed). For example, when the electronic device 100 is screen-off, after receiving an operation of tapping a power button by the user, the power management service may determine that the operation of tapping the power button by the user is a screen-on event. The power management service may send a screen-on event indication message to the lock screen application at the application layer. After receiving the screen-on event indication message, the lock screen application may trigger the electronic device 100 to display, on a screen, an upper-layer element of a wallpaper in the screen-locked state.

In some embodiments, after receiving the screen-on event indication message, the lock screen application may further send, to the linkage animation engine application, a message indicating that the electronic device 100 enters the screen-locked state from an AOD state. When receiving the message indicating that the electronic device 100 enters the screen-locked state from the AOD state, the linkage animation engine application may parse a theme package of a super wallpaper currently used by the electronic device 100, to trigger the electronic device 100 to play an animation that is linked to a status change process of changing from the AOD state to the screen-locked state.

In some embodiments, content displayed by the electronic device 100 in the AOD state includes an AOD image. The AOD image may be a dynamic image. In other words, the AOD image may be an animation that includes a plurality of frames of images. The dynamic AOD image may be a part of an animation corresponding to a super wallpaper. In the AOD state, the electronic device 100 may cyclically play the plurality of frames of images in an AOD image display region. The power management service may further send the screen-on event indication message to the AOD application. After receiving the screen-on event indication message, the AOD application may obtain image information of current AOD from the AOD display service. The image information of the current AOD may indicate a last frame of image displayed in the AOD state before the electronic device 100 enters the screen-locked state in response to the screen-on event. The AOD application may send the image information of the current AOD to the linkage animation engine application. Then, the linkage animation engine application may trigger the electronic device 100 to play, in a process of changing from the AOD state to the screen-locked state, the currently used super wallpaper starting from a position, of an image indicated by the image information of the current AOD, on an animation corresponding to the currently used super wallpaper. A last frame of image displayed in the AOD state before the electronic device 100 enters the screen-locked state in response to the screen-on event is associated with an image of a first frame of wallpaper displayed after the electronic device enters the screen-locked state. For example, the last frame of image displayed in the AOD state before the electronic device enters the screen-locked state and the image of the first frame of wallpaper displayed after the electronic device enters the screen-locked state are a same image or two adjacent frames of image in a continuous animation. In this way, the AOD image and the lock screen wallpaper are smoothly switched in a process in which the electronic device 100 enters the desktop state from the screen-locked state, to avoid a sudden change of vision. This can provide smooth visual experience for the user in the status change process of the electronic device 100.

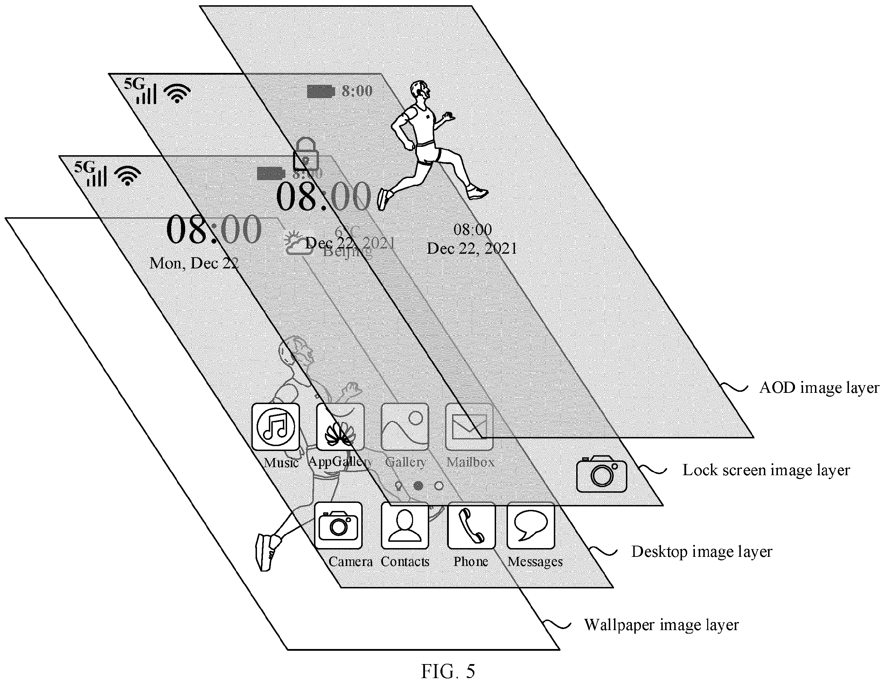

That the electronic device 100 displays the wallpaper, the upper-layer element of the wallpaper, and the AOD content is described with reference to a scenario shown in FIG. 5, to facilitate understanding of a relationship among the AOD content, the upper-layer element of the wallpaper, and the wallpaper.

As shown in FIG. 5, a user interface displayed by the electronic device 100 may include one or more of the following image layers: a wallpaper image layer, a desktop image layer, a lock screen image layer, and an AOD image layer. The wallpaper image layer may be used to display a wallpaper. The desktop image layer may be used to display the upper-layer element of the wallpaper in the desktop state. The lock screen image layer may be used to display the upper-layer element of the wallpaper in the screen-locked state. The AOD image layer may be used to display the AOD content.

The plurality of image layers may be displayed on the user interface of the electronic device 100 in an overlapping manner. The AOD image layer may be located at the top of each image layer. Both the lock screen image layer and the desktop image layer may be located above the wallpaper image layer. Both the lock screen image layer and the desktop image layer may be transparent image layers.

In some embodiments, when the electronic device 100 is in the AOD state, the electronic device 100 may display the AOD content at the AOD image layer by using the AOD application. The AOD image layer may cover the lock screen image layer, the desktop image layer, and the wallpaper image layer. That is, when the electronic device 100 is in the AOD state, the user can view only the AOD content. Alternatively, the lock screen image layer, the desktop image layer, and the wallpaper image layer may be removed from the electronic device 100 or run in the background. A method for processing the lock screen image layer, the desktop image layer, and the wallpaper image layer when the electronic device 100 is in the AOD state is not limited in embodiments of this application.

Based on an operation of entering the screen-locked state from the AOD state, the electronic device 100 may remove the AOD image layer by using the AOD application, display, at the lock screen image layer by using the lock screen application, the upper-layer element of the wallpaper in the screen-locked state, and play, at the wallpaper image layer by using the linkage animation engine application, an animation that is linked to a process of changing from the AOD state to the screen-locked state. An image layer displayed on the lock screen interface of the electronic device 100 does not include the desktop image layer. Because the lock screen image layer is a transparent image layer, the user can view a wallpaper located below the lock screen image layer. However, the upper-layer element of the wallpaper displayed at the lock screen image layer may block display content that is at the wallpaper image layer and that is located in a display region in which the upper-layer element of the wallpaper is located.

Based on an operation of entering the screen-locked state from the AOD state, the electronic device 100 may remove the lock screen image layer by using the lock screen application, display, at the desktop image layer by using the desktop application, the upper-layer element of the wallpaper in the desktop state, and play, at the wallpaper image layer by using the linkage animation engine application, an animation that is linked to a process of changing from the screen-locked state to the desktop state. Because the desktop image layer is a transparent image layer, the user can view a wallpaper located below the desktop image layer. However, the upper-layer element of the wallpaper displayed at the desktop image layer may block display content that is at the wallpaper image layer and that is located in a display region in which the upper-layer element of the wallpaper is located.

A display method of the AOD content, the upper-layer element of the wallpaper, and the wallpaper are not limited in embodiments of this application.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For a structure of the electronic device 200 in the communication system 30, refer to the structure of the electronic device 100 shown in FIG. 4A and FIG. 4B. Details are not described herein again.

**The following describes a scenario in which a user customizes a super wallpaper according to this application.**

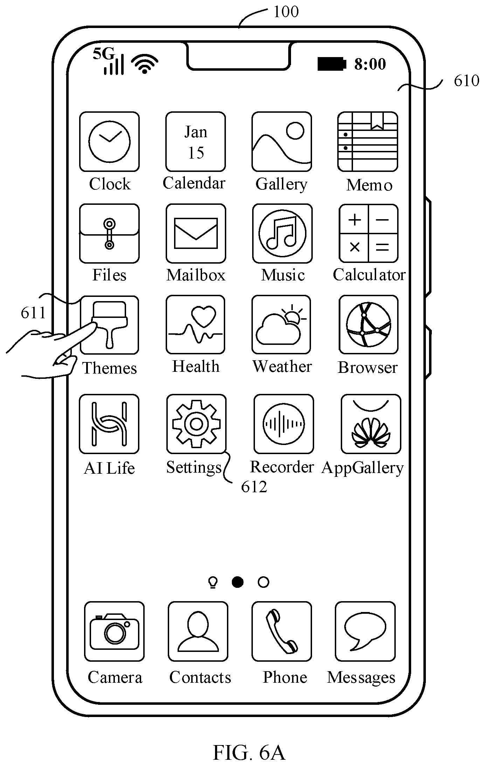

FIG. 6A to FIG. 6G are schematic diagrams of examples of scenarios in which the user customizes the super wallpaper according to an embodiment of this application.

As shown in FIG. 6A, the electronic device 100 may display a user interface 610. The user interface 610 may be a desktop of the electronic device 100. An icon of an application is displayed on the user interface 610, for example, a theme application icon 611, a settings application icon 612, and a recorder application icon. The icon of the application may be used to trigger the electronic device 100 to start the application corresponding to the icon.

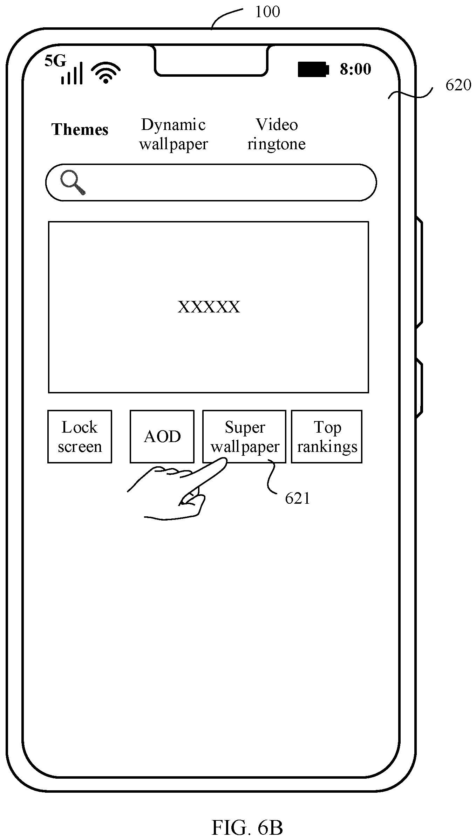

In response to an operation on the theme application icon 611, for example, a touch operation, the electronic device 100 may display a user interface 620 shown in FIG. 6B. The user interface 620 may be a user interface of a theme application. Controls for downloading theme content such as a wallpaper, a font, AOD, and an incoming call ringtone may be included on the user interface of the theme application.

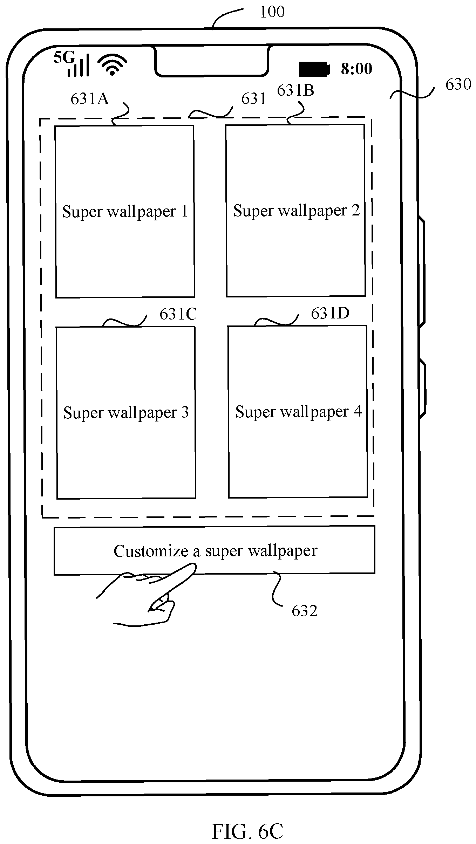

As shown in FIG. 6B, a super wallpaper control 621 may be included on the user interface 620. In response to an operation on the super wallpaper control 621, the electronic device 100 may display a user interface 630 shown in FIG. 6C. A super wallpaper display region 631 and a super wallpaper customization control 632 may be included on the user interface 630.

An identifier of one or more super wallpapers may be displayed in the super wallpaper display region 631, for example, an identifier 631A of a super wallpaper 1, an identifier 631B of a super wallpaper 2, an identifier 631C of a super wallpaper 3, and an identifier 631D of a super wallpaper 4. In some embodiments, the identifier of the super wallpaper may be used to trigger the electronic device 100 to display a details interface of the super wallpaper. The electronic device 100 may display a use effect of the super wallpaper on the details interface of the super wallpaper, so that the user can preview the super wallpaper. The electronic device 100 may further display a download control on the details interface of the super wallpaper, and the download control may be configured to download the super wallpaper.

In some embodiments, a super wallpaper that corresponds to an identifier displayed in the super wallpaper display region 631 may include a super wallpaper released on the theme application and a super wallpaper customized by the user. The super wallpaper released on the theme application may be a super wallpaper that is uploaded to the theme server 300 and approved by a reviewer of a theme application party. A resource of the super wallpaper released on the theme application (for example, a super wallpaper application, and a theme package of the super wallpaper) may be stored in the theme server 300. By using the theme application, the user can download the super wallpaper released on the theme application. The super wallpaper customized by the user may be a super wallpaper generated by the electronic device 100 based on image data that is input by the user. A resource of the super wallpaper customized by the user (for example, a theme package of the super wallpaper) may be stored locally (that is, in the electronic device 100) or may be stored in a cloud server.

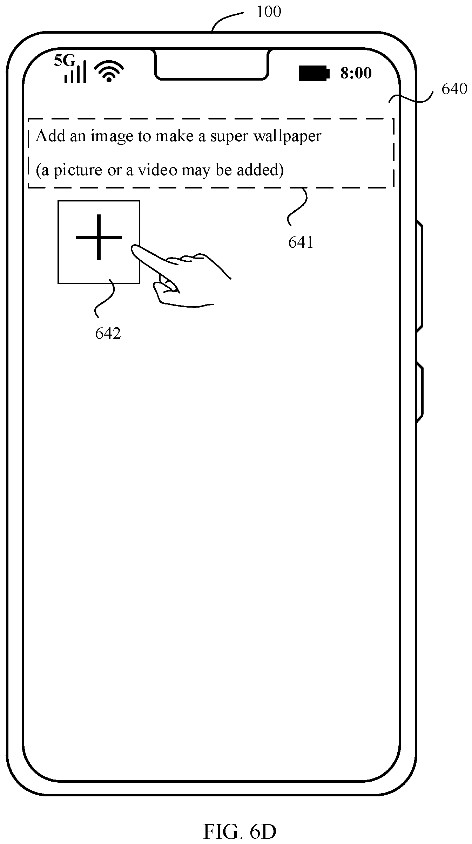

The super wallpaper customization control 632 may be configured to make a super wallpaper. As shown in FIG. 6C, in response to an operation on the super wallpaper customization control 632, the electronic device 100 may display a user interface 640 shown in FIG. 6D. The user interface 640 may include a super wallpaper making prompt 641 and an add control 642.

The super wallpaper making prompt 641 may be used to give the user a prompt of cautions about a wallpaper making method. For example, the super wallpaper making prompt 641 may include a text prompt "Add an image to make a super wallpaper by a user (a picture or a video may be added)". Content of the super wallpaper making prompt 641 is not limited in embodiments of this application.

The add control 642 may be configured to add image data for making a super wallpaper. The image data may include a picture or a video. In some embodiments, in response to an operation on the add control 642, the electronic device 100 may start a gallery application of the electronic device 100. The user can select a picture or a video from the gallery application to make a super wallpaper. In some embodiments, in response to an operation on the add control 642, the electronic device 100 may start a camera application to collect image data. The user can shoot a picture or a video through the camera application to make a super wallpaper. A method for adding image data in a super wallpaper making process is not limited in embodiments of this application.

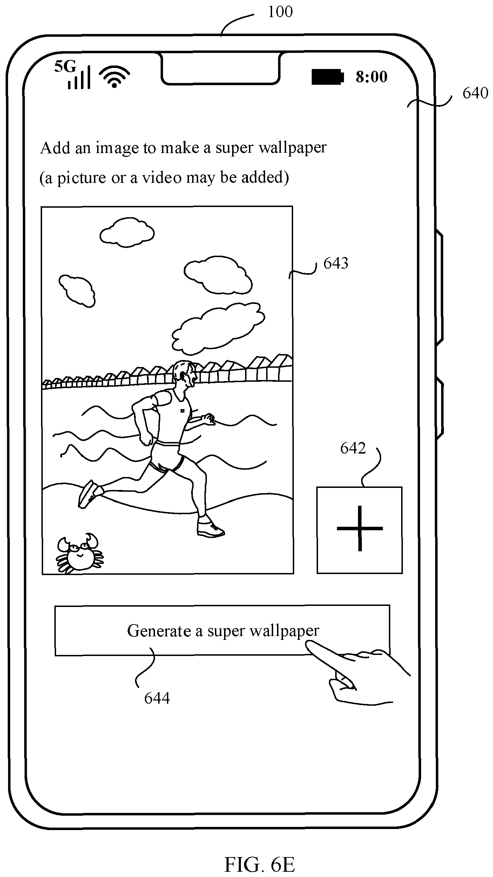

As shown in FIG. 6E, in response to an operation of adding image data, the electronic device 100 may display the added image data, for example, an image 643, on the user interface 640. The image 643 may be one picture. The image data for making the super wallpaper may be one picture, a plurality of pictures, a combination of one picture and one video, or a combination of a plurality of pictures and a plurality of videos. In this case, when the image 643 shown in FIG. 6E is added, the user may continue to add image data by using the add control 642.

When the image data for making the super wallpaper is added, the electronic device 100 may further display a generate control 644 on the user interface 640. The generate control 644 may be configured to trigger the electronic device 100 to generate the super wallpaper based on the added image data, to obtain a theme package of the super wallpaper. The theme package of the super wallpaper may include a description file and image data for displaying the super wallpaper. An animation effect in which the super wallpaper is linked to one or more status change processes of the electronic device may be defined in the description file. The electronic device 100 may generate the super wallpaper by using a linkage animation engine application. A specific process of generating the super wallpaper is described in a subsequent embodiment. Details are not described herein.

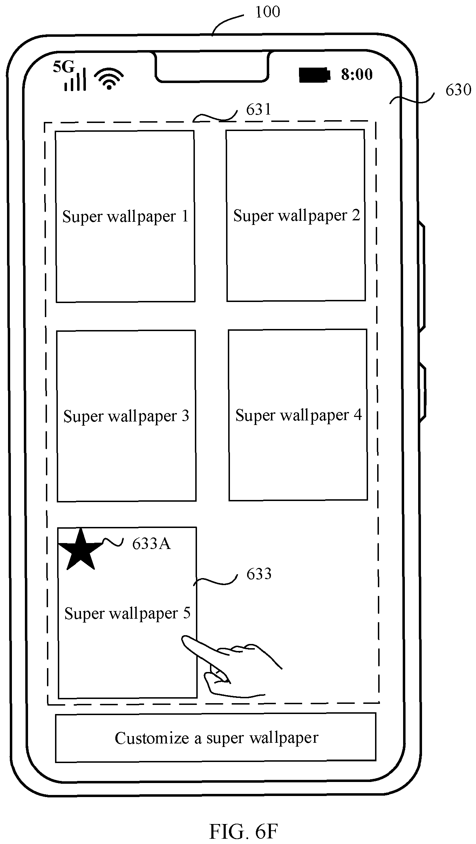

In some embodiments, when the super wallpaper is completely made, the electronic device 100 may display, in the super wallpaper display region 631 of the user interface 630, an identifier 633 shown in FIG. 6F. The identifier 633 may be an identifier of a super wallpaper (for example, a super wallpaper 5) that is made by the electronic device 100 based on the image 643 that is added by the user and is shown in FIG. 6E.

As shown in FIG. 6F, the identifier 633 of the super wallpaper 5 may have a customized identifier 633A. The customized identifier 633A may indicate that the super wallpaper 5 corresponding to the identifier 633 is the super wallpaper customized by the user. In some embodiments, an identifier of the super wallpaper customized by the user in the super wallpaper display region 631 may have a customized identifier. The customized identifier may be used to distinguish the super wallpaper customized by the user from the super wallpaper released on the theme application. A display style of the customized identifier 633A is not limited in embodiments of this application.

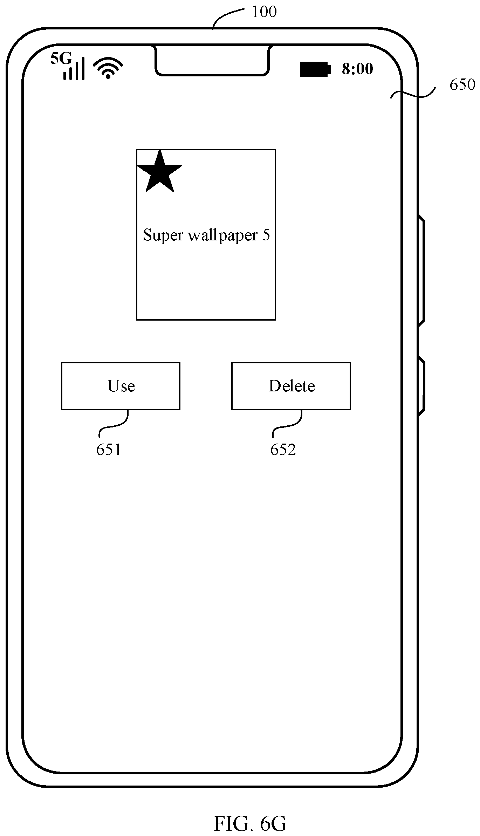

As shown in FIG. 6F, in response to an operation on the identifier 633, the electronic device 100 may display a user interface 650 shown in FIG. 6G. The user interface 650 may be a details interface of the super wallpaper 5. A use control 651 and a delete control 652 may be included on the user interface 650.

The use control 651 may be configured to trigger the electronic device 100 to set the super wallpaper 5 as a currently used super wallpaper.

The delete control 652 may be configured to trigger the electronic device 100 to delete the super wallpaper 5. The super wallpaper 5 is the operation wallpaper customized by the user. A resource of the super wallpaper 5 may be stored locally or on the cloud server. In response to an operation on the delete control 652, the electronic device 100 may delete the resource of the super wallpaper 5 from a local storage and/or the cloud server.

In some embodiments, the linkage animation engine application for making the super wallpaper may be integrated in the theme application. In this case, the user can find, in the theme application based on scenarios shown in FIG. 6A to FIG. 6G, a function entry for customizing the super wallpaper, to make the super wallpaper. In addition to a theme application, the linkage animation engine application may be integrated into another application, for example, a settings application. This is not limited in embodiments of this application.

In some embodiments, the linkage animation engine application for making the super wallpaper may be an independent application. For example, the linkage animation engine application may be preset in the electronic device 100. For another example, the linkage animation engine application may be released in AppGallery. The user can install the linkage animation engine application in the electronic device 100 by using AppGallery. When the linkage animation engine application is installed on the electronic device 100, the electronic device 100 may display an icon of the linkage animation engine application on the desktop. The user can start the linkage animation engine application based on the icon of the linkage animation engine application to find a function entry for customizing the super wallpaper, to make the super wallpaper.

It can be learned from the scenarios shown in FIG. 6A to FIG. 6G that the user can make a super wallpaper by selecting a picture and/or a video that the user likes. In this way, the user can use a super wallpaper owned by the user in addition to the super wallpaper released on the theme application. The super wallpaper making process is also simple. This can increase interest of the user in using the super wallpaper.

**Based on the foregoing scenario of customizing the super wallpaper, the following describes an implementation process of custom-making the super wallpaper provided in this application.**

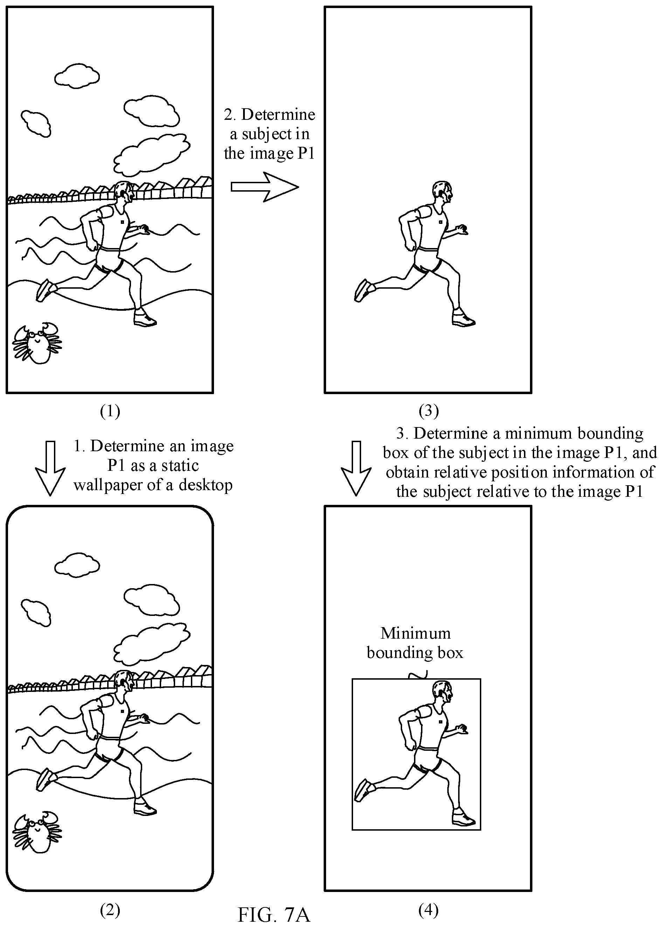

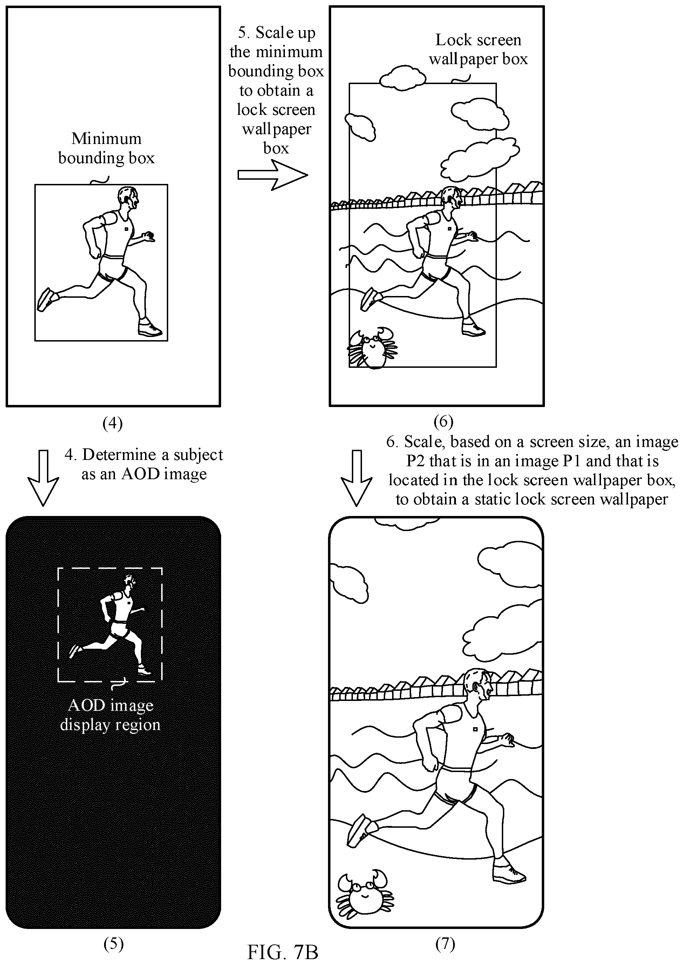

FIG. 7A and FIG. 7B show examples of the implementation process of customizing the super wallpaper.

As shown in FIG. 7A, (1) in FIG. 7A is an image P1. The image P1 may be determined based on the image 643 input by the user in a scenario shown in FIG. 6E.

In a possible implementation, the electronic device 100 may process (for example, clipping processing or scaling processing) the image 643 based on a size of the image 643 and a screen resolution of the electronic device 100, to obtain the image P1. A size of the image P1 is adapted to the screen resolution of the electronic device 100.

It can be learned from (2) in FIG. 7A that the electronic device 100 may determine the image P1 as a static wallpaper of the desktop. The static wallpaper of the desktop may be a static wallpaper displayed in the desktop state after an animation linked to the status change process of the electronic device 100 is completely played. For example, the electronic device 100 may display the static wallpaper of the desktop after completing playing of the animation in a process in which the electronic device 100 enters the desktop state from an AOD state or enters the desktop state from a screen-locked state.

In a possible implementation, the static wallpaper of the desktop may be a last frame of image of an animation presented in a process in which the AOD state changes to the desktop state, or a last frame of image of an animation presented in a process in which the screen-locked state changes to the desktop state. In this way, when the electronic device 100 enters the AOD state (or the screen-locked state) from the desktop state, the electronic device 100 may reversely play an animation that is linked to a change process of changing from the AOD state (or the screen-locked state) to the desktop state. For example, in a process of entering the desktop state from the AOD state, the electronic device 100 may play an animation in which a flower gradually blooms from a bud. In a process of entering the AOD state from the desktop state, the electronic device 100 may play an animation in which a flower gradually closes to a bud from a full bloom state.

It can be learned from (3) in FIG. 7A that the electronic device 100 may determine a subject in the image P1. The subject in the image may be, for example, a person, an animal, or a building. In a possible implementation, the electronic device 100 may determine the subject in the image P1 by using a subject determining model. The subject determining model may be a neural network-based model. The subject determining model may be configured to: receive an image input and output an image that retains only the subject. The subject determining model may include a priority of subjects of different types. For example, the priority of the subjects may include: the person>the animal>the building. The electronic device 100 may use the image P1 as an input of the subject determining model. The subject determining model may first identify whether the person exists in the image P1. If it is determined that no person exists in the image P1, the subject determining model may further recognize whether the animal exists in the image P1. If it is determined that the person exists in the image P1, the subject determining model may determine a person (for example, a moving person in the image P1) who occupies the most pixels in the image P1 as the subject in the image P1. Thereafter, the subject determining model may separate the subject in the image P1 from a background of the image P1 (content other than the subject in the image P1). The subject determining model may input an image that retains only the subject in the image P1, namely, an image shown in (3) in FIG. 7A. The subject determining model may also output an image that retains only the background of the image P1. A method for determining the subject in the image P1 by the electronic device 100 is not limited in embodiments of this application.

It can be learned from (4) in FIG. 7A that, when determining the subject in the image P1, the electronic device 100 may determine a minimum bounding box of the subject in the image P1. The electronic device 100 may obtain relative position information of the subject relative to the image P1 based on the minimum bounding box.

The minimum bounding box may be used to circle a region that includes the subject and has the smallest area. A shape of the minimum bounding box may be a rectangle, a circle, or the like. The shape of the minimum bounding box is not limited in embodiments of this application. The relative position information of the subject relative to the image P1 may include relative position information of a center point of the minimum bounding box and a center point of the image P1, and a distance between a pixel on the minimum bounding box and an edge pixel of the image P1. Content included in the relative position information of the subject relative to the image P1 is not limited in embodiments of this application.

The relative position information of the subject relative to the image P1 may be used as a basis for adjusting a position of the subject in the image P1, to generate a corresponding animation effect. For example, by adjusting a relative position between the subject and the background in the image P1, the electronic device 100 may present, to the user, an animation effect that the subject is moving.

As shown in FIG. 7B, an image shown in (4) in FIG. 7B is an image shown in (4) in FIG. 7A. Based on the minimum bounding box shown in (4) in FIG. 7A, the electronic device 100 may determine the subject in the image P1 as an AOD image.

In some embodiments, the electronic device 100 may store an AOD display style. The AOD display style indicates how AOD content is presented on an AOD interface. The AOD display style may include a display position of the AOD image, a size of an AOD image display region, a display position of AOD time, and the like. The AOD image display region is shown in (5) in FIG. 7B. The electronic device 100 may perform processing (for example, scaling or rotation) on the subject, so that the subject can be displayed in the AOD image display region.

In a possible implementation, the electronic device 100 may perform scaling processing at the subject based on a difference between a size of the minimum bounding box and a size of the APD image display region and based on a long-side proportion principle, so that the subject is displayed in the AOD image display region at an appropriate size.

In addition, the electronic device 100 may determine other AOD content based on the AOD display style, to obtain the AOD interface.

In some embodiments, the AOD display style for determining the AOD interface may be selected by the user. For example, in the process of customizing the super wallpaper shown in FIG. 6A to FIG. 6G, the electronic device 100 may provide a plurality of AOD display style options. The user may select an AOD display style.

It can be learned from (6) in FIG. 7B that the electronic device 100 may scale up the minimum bounding box to obtain a lock screen wallpaper box.

It can be learned from (7) in FIG. 7B that the electronic device 100 may scale, based on a screen size, an image P2 that is in the image P1 and that is located in the lock screen wallpaper box, to obtain a static lock screen wallpaper. The static lock screen wallpaper may be a static wallpaper displayed in the screen-locked state after an animation linked to the status change process of the electronic device 100 is completely played. For example, after completing playing of the animation in a process in which the electronic device 100 enters the screen-locked state from the AOD state or enters the screen-locked state from the desktop state, the electronic device 100 may display the static lock screen wallpaper when staying in the screen-locked state.

In a possible implementation, the static lock screen wallpaper may be a last frame of image of an animation presented in a process in which the AOD state (or the desktop state) changes to the screen-locked state. In this way, when the electronic device 100 enters the AOD state (or the desktop state) from the screen-locked state, the electronic device 100 may reversely play an animation that is linked to a change process of changing from the AOD state (or the desktop state) to the screen-locked state.

In a possible implementation, the electronic device 100 may scale up the minimum bounding box based on a preset proportion, and determine a position of the lock screen wallpaper box in the image P1 based on a preset relative position between the minimum bounding box and the lock screen wallpaper box. For example, a shape of the minimum bounding box is a rectangle. The preset proportion may be 1.2. That is, the electronic device 100 may scale up both a long side and a short side of the minimum bounding box by 1.2 times, to obtain the lock screen wallpaper box. The preset relative position may be a position at which the center point of the minimum bounding box has a distance of w pixels from a position below a center point of the lock screen wallpaper box, where w is a positive integer. A method for determining, by the electronic device 100, a size and the position of the lock screen wallpaper box in the image P1 is not limited in embodiments of this application.

It can be learned from the foregoing embodiments shown in FIG. 7A and FIG. 7B that, in a process of making a super wallpaper based on an image, for example, an image shown in (2) in FIG. 7A, an image in the minimum bounding box shown in (4) in FIG. 7A, or an image shown in (7) in FIG. 7B that is input by the user, the electronic device 100 may obtain image data for displaying the super wallpaper. The electronic device 100 may determine to generate a transition animation based on an animation effect algorithm library, to obtain a super wallpaper linked to the status change process of the electronic device 100. For example, the electronic device 100 may determine an animation passed when the image in the minimum bounding box shown in (4) in FIG. 7A changes to the image shown in (7) in FIG. 7B. In this way, the electronic device 100 can obtain, in the super wallpaper, an animation that is linked to a change process of changing from the AOD state to the screen-locked state. For the animation, refer to the animation shown in the image A1 to the image A5 in FIG. 2. For another example, the electronic device 100 may determine an animation passed when the image shown in (7) in FIG. 7B changes to the image shown in (2) in FIG. 7A. In this way, the electronic device 100 can obtain, in the super wallpaper, an animation that is linked to a change process of changing from the screen-locked state to the desktop state. For the animation, refer to the animation shown in the image A5 to the image A7 in FIG. 2.

In a possible implementation, the electronic device 100 may write, into the description file, resource information of the image data for displaying the super wallpaper and an animation effect determined based on the image data. The electronic device 100 may obtain a theme package of the super wallpaper. The theme package of the super wallpaper may include the description file and image data for displaying the super wallpaper.

It should be noted that making the super wallpaper and obtaining the theme package of the super wallpaper may be specifically implemented by the linkage animation engine application on the electronic device 100.

In some embodiments, the user may further make a super wallpaper by using a plurality of pictures, a video, or a combination of a picture and a video. For example, the user may add a plurality of images in a process of making a super wallpaper, and specify a playing sequence of the images in the super wallpaper. The electronic device 100 may generate the super wallpaper based on the playing sequence of the plurality of images. For another example, the user may add a video in a process of making a super wallpaper, and specify, in the video, a frame of video image as an AOD image, a frame of video image as a static lock screen wallpaper, and a frame of video image as a static wallpaper of the desktop. The electronic device 100 may generate the super wallpaper based on the video added by the user and the images that are specified as the AOD image, the static lock screen wallpaper, and the static wallpaper of the desktop.

In a possible implementation, when image data for generating a super wallpaper includes a plurality of pictures or videos, the electronic device 100 may identify elements included in the plurality of pictures or videos, for example, a person, a scene, an animal, a building, and a vehicle. The electronic device 100 may make a corresponding animation effect for the foregoing elements based on the animation effect algorithm library, to generate a super wallpaper. For example, the foregoing elements may present a 3D animation effect, a fluid animation effect, a time-lapse animation effect, a rotation animation effect, a scaling animation effect, and a depth-of-field change animation effect. A type of the animation effect is not limited in embodiments of this application.

For example, the electronic device 100 receives a user operation of generating a super wallpaper by using a video. The video may present a dynamic change process of one or more elements. An element in the super wallpaper generated by the electronic device by using the video may also include a same or similar dynamic change process. For example, the electronic device 100 may extract, from a plurality of frames of images in the video, images in which states of elements included in the video change at different moments, to generate a super wallpaper that has the dynamic change process. For example, the electronic device 100 may make a corresponding animation effect based on the animation effect algorithm library and the images in which the states of the elements included in the video change at different moments, to generate a super wallpaper.

For example, the video is a video that presents a running person scene, and a plurality of frames of images in the video may present a posture change of the person during running. The electronic device 100 may extract different postures of the person during running from the plurality of frames of images in the video. The electronic device 100 may make, based on the animation effect algorithm library and the different postures of the person during running, a super wallpaper that presents the running scene. For example, when the electronic device 100 enters the desktop state from the AOD state, the electronic device 100 may play the super wallpaper. During playing of the super wallpaper, the running person in the video may run from one side to the other side of a screen of the electronic device 100. In addition to the animation effect, the super wallpaper may present another animation effect specified by using the person running in the video. For example, during playing of the super wallpaper, the running person in the video may present, on the screen of the electronic device 100, an animation effect of running in a direction away from the user.

For another example, the video is a video that presents a river flowing scene, and a plurality of frames of images in the video may present a flowing state of the river at different moments. The electronic device 100 may extract different states of the river in a flowing process from the plurality of frames of images in the video. The electronic device 100 may make, based on the animation effect algorithm library and the different states of the river in the flowing process, a super wallpaper that presents the river flowing scene.

**Based on the scenarios shown in** **FIG. 6A to FIG. 6G****, the following describes a theme package of a super wallpaper obtained by making the super wallpaper in this application.**

The theme package of the super wallpaper may include a description file of the super wallpaper and image data for displaying the super wallpaper.

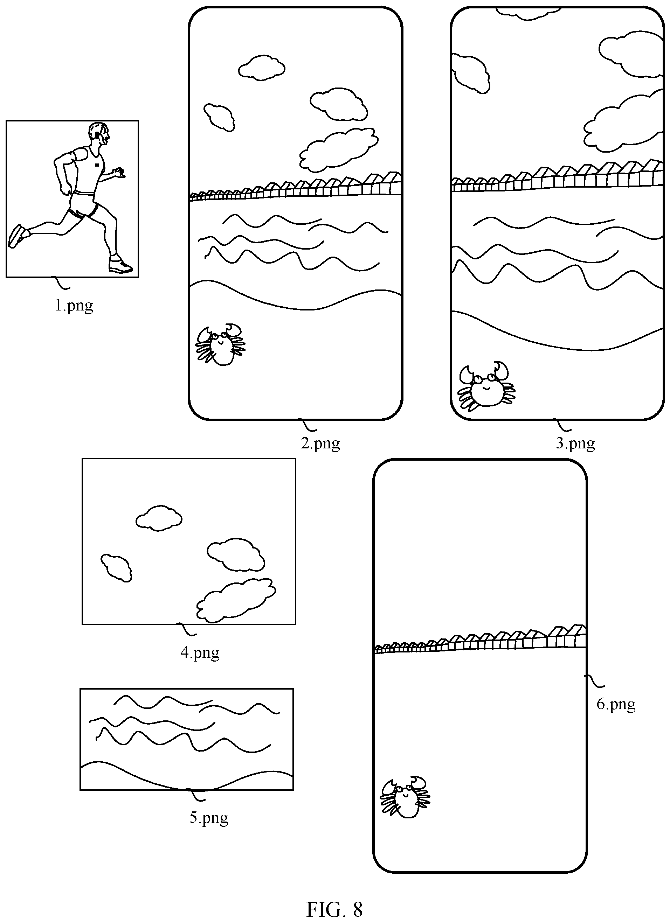

FIG. 8 shows an example of image data for displaying a super wallpaper (namely, the super wallpaper 5) generated based on the image 643 shown in FIG. 6E. The image data may include an image whose name is "1.png", an image whose name is "2.png", an image whose name is "3.png", an image whose name is "4.png", an image whose name is "5.png", and an image whose name is "6.png".

The images may be obtained by using the method shown in FIG. 7A and FIG. 7B. For example, the image whose name is "1.png" may be the image in the minimum bounding box shown in (4) in FIG. 7A. The image whose name is "2.png" may be the image shown in (2) in FIG. 7A. The image whose name is "3.png" may be the image shown in (7) in FIG. 7B. The image whose name is "4.png" may be a sky image separated from the image P1 after image recognition is performed on the image P1 shown in (1) in FIG. 7A. The sky image may be an image of a region in which the sky is located in the image P1. The image whose name is "5.png" may be an ocean image separated from the image P1 after image recognition is performed on the image P1 shown in (1) in FIG. 7A. The ocean image may be an image of a region in which the ocean is located in the image P1. The image whose name is "5.png" may be a background image obtained by performing image recognition on the image P1 shown in (1) in FIG. 7A, and removing one or more elements (for example, the moving person, the sky, and the ocean) from the image P1.

A method for separating, by the electronic device 100, the sky image, the ocean image, and the background image from the image P1 is not limited in embodiments of this application. For example, the electronic device 100 may separate the image by using a neural network-based image recognition model and an image segmentation model. The electronic device 100 may further pad, by using a neural network-based image padding model, the sky, the ocean, and a house that are in the image P1 and that are blocked by the subject (namely, the moving person). In this way, elements in the sky image, the ocean image, and the background image can be more complete, and an animation effect of a super wallpaper generated by combining the sky image, the ocean image, and the background image can be more realistic.

A name of the image is not limited in embodiments of this application.

In addition to an image shown in FIG. 8, the image data for displaying the super wallpaper 5 may also include more or less images. For example, the electronic device 100 may further perform image recognition on the image P1, to separate more elements (for example, the house and a crab) from the image P1. In this way, the electronic device 100 can perform different processing on different elements in the image P1, to obtain richer animation effects.

An animation effect that is of the super wallpaper 5 and that is linked to the status change process of the electronic device 100 may be defined in a description file of the super wallpaper 5. The status change process of the electronic device 100 may include one or more of the following: entering the screen-locked state from the AOD state, entering the desktop state from the screen-locked state, entering the desktop state from the AOD state, entering the screen-locked state from the desktop state, entering the AOD state from the screen-locked state, and entering the AOD state from the desktop state.

The following provides an example of the description file of the super wallpaper 5 provided in embodiments of this application.

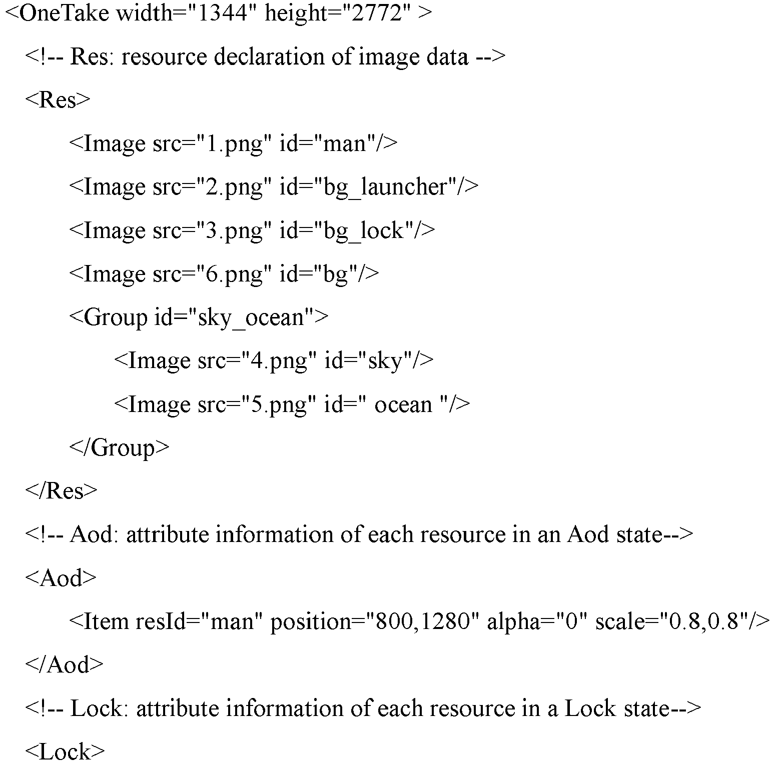

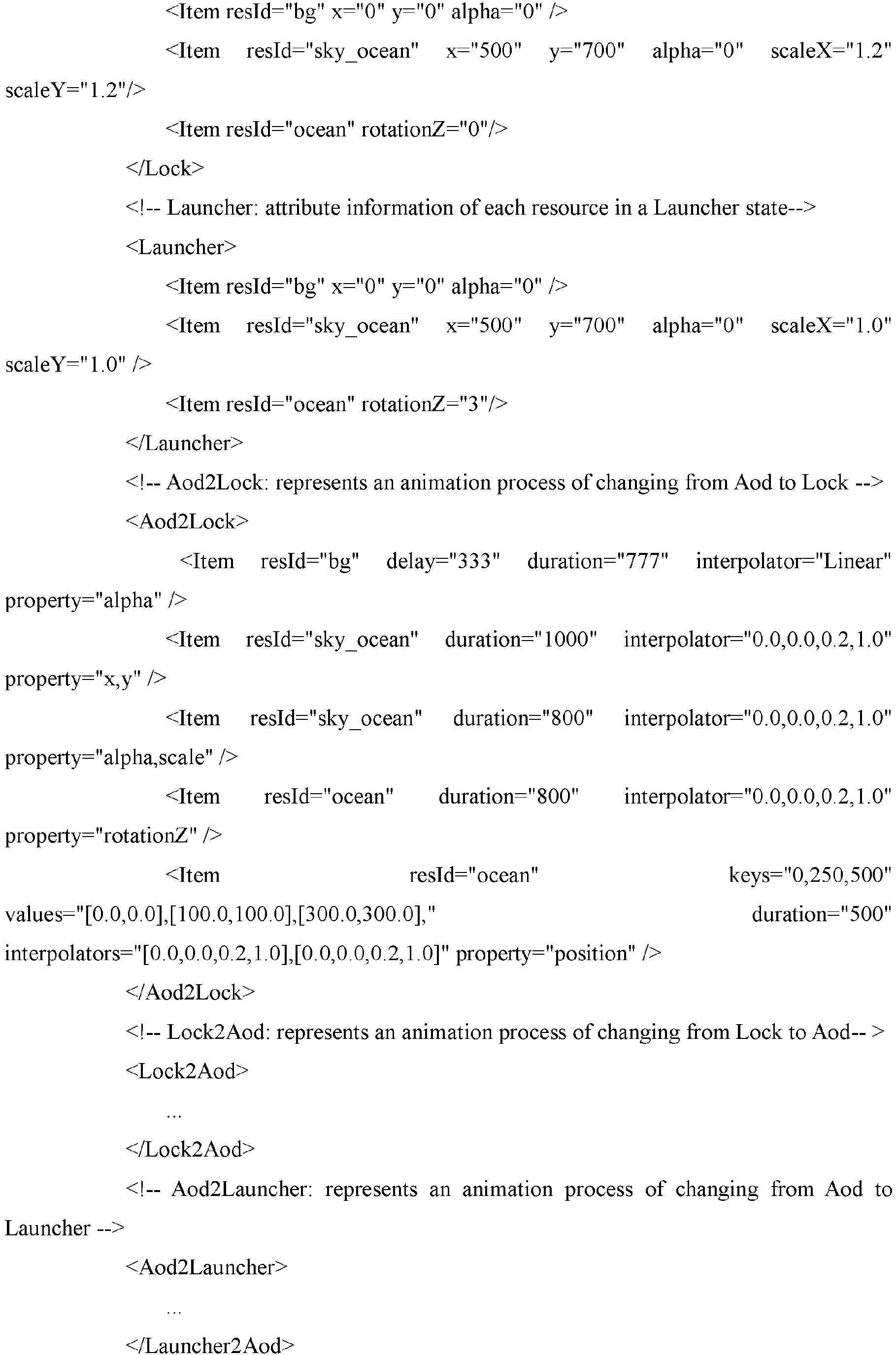

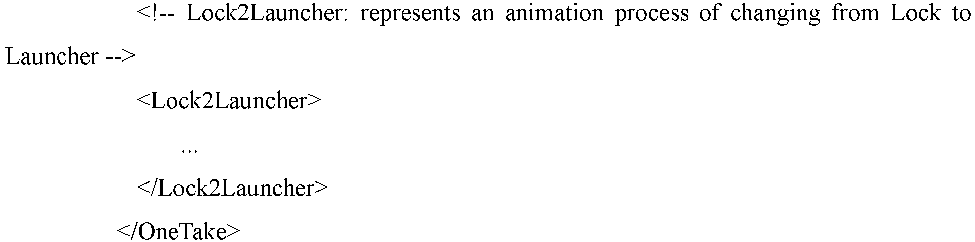

In the description file of the super wallpaper 5, a node <OneTake> may describe a width and a height of an image layer for displaying the super wallpaper. The width and the height of the image layer may be determined based on the screen resolution of the electronic device 100. For example, a horizontal screen resolution and a vertical screen resolution that are obtained by the electronic device 100 are respectively 1344 pixels (pixel, px) and 2772 px. In this case, the node <OneTake> may include an attribute of a width and a height. A value of the width is 1344. A value of the height is 2772.

A node <Res> may describe resource information for displaying image data of the super wallpaper. The node <Res> may include an image node and a group node. The image node may represent an image resource. Another image node may be further nested in the image node. This may indicate that a parent-child relationship exists between the image node and the another image node nested in the image node. The group node may include another image node. This may indicate that a parent-child relationship exists between the group node and the another image node nested in the group node. The image node may include an image attribute: src and id. src in the image attribute may indicate a name of an image, id in the image attribute may be used to identify the image. When parsing the description file, the electronic device 100 may search for a corresponding image based on id.

For example, the node <Res> includes the image node: <Image src="1.png" id="man"/>. The image node declares an image whose name is "1.png" and id is "man". The image is the image whose name is "1.png" and shown in FIG. 8. The node <Res> also includes the group node: <Group id="sky_ocean">. An id of the group node may be sky_ocean. The group node may include image nodes: <Image src="4.png" id="sky"/> and <Image src="5.png" id=" ocean "/>. It can be seen that the two image nodes nested in the group node respectively declare the image whose name is 4.png and id is a sky and the image whose name is 5.png and id is an ocean. The images declared by the two image nodes are the sky image whose name is "4.png" and shown in FIG. 8 and the background image whose name is "5.png" and shown in FIG. 8.

A node <Aod> may describe attribute information of the image declared in the node <Res> in the AOD state.

For example, the node <Aod> includes declaration of the attribute information: <Item resId="man" position="800,1280,0" alpha="0" scale="0.8,0.8"/>. An item node may indicate attribute information of a specified resource. An item node included in the node <Aod> may indicate attribute information of an image whose id is "man". The item node may include the following item attribute: resId, position, alpha, and scale.

resId may indicate an id of a resource corresponding to the item node. For example, the id is "man".

position may indicate position information that is of the resource corresponding to the item node and that is displayed on the screen, position may include two or three values that may be separated by ",", or the position information may be represented by x, y, and z. position includes only the two values, which may represent a 2D scenario. That is, there are only values of x and y. position includes the three values, which may represent a 3D scenario. That is, there are values of x, y, and z. A center point of the screen of the electronic device 100 may be an origin of a coordinate system for indicating the position information. For example, a value of position may be "800, 1280". Alternatively, a value of position may be represented in the item node as: x="800" y=" 1280".

alpha may indicate transparency of the resource corresponding to the item node. A value range of alpha may be [0, 1], that is, a value greater than or equal to 0 and less than or equal to 1.

scale may indicate scaling information of the resource corresponding to the item node. scale may include two or three values that may be separated by ",", or the scaling information may be represented by scaleX, scaleY, and scaleZ. A value of scale includes only the two values, which may represent a 2D scenario. That is, there are only values of scaleX and scale Y. A value of scale includes the three values, which may represent a 3D scenario. That is, there are values of scaleX, scaleY, and scaleZ.

In addition to the foregoing item attribute, the item node can also include more or fewer item attributes. For example, the item attribute in the item node may further include rotation. rotation may indicate rotation information of the resource corresponding to the item node. rotation may include three or three values that may be separated by ",", or the rotation information may be represented by rotationX, rotationY, and rotationZ. rotation includes only the two values, which may represent a 2D scenario. That is, there are only values of rotationX and rotationY rotation includes the three values, which may represent a 3D scenario. That is, there are values of rotationX, rotationY, and rotationZ.

A node <Lock> may describe attribute information of a resource declared in the node <Res> in the screen-locked state.

For example, the node <Lock> may include three item nodes. The three item nodes may respectively indicate attribute information of resources whose ids are "bg", "sky_ocean", and "ocean" on the node <Res>. For an item attribute in the item nodes, refer to descriptions of the node <Aod>.

It should be noted that the resource whose id is sky_ocean in the node <Res> is a group node. The group node is a parent node (namely, the image node) of the resource whose id is ocean in the node <Res>. In this case, the resource whose id is ocean can inherit the item attribute of the resource whose id is sky_ocean on the item node. It can be learned from the description file of the super wallpaper 5 that, in the node <Lock>, an item attribute of a resource whose id is "sky_ocean" may include position (a value may be x="500" y="700"), alpha (a value may be 0), scale (a value may be scaleX="1.2" scaleY="1.2"). An item attribute of a resource whose id is "ocean" may include rotation (a value may be rotationZ="0"). In addition, because the resource whose id is "ocean" can inherit the item attribute of the resource whose id is "sky_ocean" in the item node, the item attribute of the resource whose id is "ocean" may also include position (the value may be x="500" y="700"), alpha (the value may be 0), and scale (the value may be scaleX="1.2" scaleY="1.2").

A node <Launcher> may describe attribute information of a resource declared in the node <Res> in the desktop state.

For content included in the node <Launcher>, refer to the descriptions of the node <Aod> and the node <Lock>. Details are not described herein again.

In the AOD state, the screen-locked state, and the desktop state, the item attribute position in the item node may be the position information in the 2D scenario or the position information in the 3D scenario. The item attribute scale in the item node may be the scaling information in the 2D scenario or the scaling information in the 3D scenario. The item attribute rotation in the item node may be the rotation information in the 2D scenario or the rotation information in the 3D scenario.

A node <Aod2Lock> may indicate an animation effect that is of the super wallpaper 5 and that is linked to the change process of changing from the AOD state to the screen-locked state.

The node <Aod2Lock> may include an item node. The item node in the node <Aod2Lock> may be used to declare a parameter of the animation. The item node may include an item attribute, for example, resId, property, delay, duration, interpolator, keys, values, and interpolators.

resId may indicate an id of a resource corresponding to the item node. For example, the id is "bg".

property may indicate a resource attribute included in an animation playing process of the resource corresponding to the item node. For example, a value of property may include one or more of the following: position, alpha, scale, and rotation.

delay may indicate a time delay of playing the resource corresponding to the item node in the animation playing process. A unit of delay may be millisecond (millisecond, ms).

duration may indicate duration of playing the resource corresponding to the item node in the animation playing process. A unit of duration can be ms.

interpolator may indicate a motion curve of the resource corresponding to the item node in the animation playing process. The motion curve may be, for example, a Bezier curve. A value of interpolator may be a control point of the Bezier curve. A shape of the Bezier curve may be controlled through the control point. A first-order Bezier curve includes two control points. A second-order Bezier curve includes three control points. An N-order Bezier curve includes N+1 control points.

In some embodiments, the following Bezier curves may be preset in the animation effect algorithm library: Accelerate, AccelerateDecelerate, Bounc, Decelerate, and Linear. Accelerate may indicate a Bezier curve in which a change rate starts slowly and then accelerates. AccelerateDecelerate may indicate a Bezier curve in which a change rate begins and ends slowly, and accelerates in the middle. Bounc may indicate a Bezier curve in which a change rate rebounds at the end. Decelerate may indicate a Bezier curve in which a change rate starts fast and then decelerates. Linear may indicate a Bezier curve with a constant change rate. In addition to the foregoing Bezier curves, more or fewer Bezier curves may be preset in the animation effect algorithm library. The electronic device 100 may set a movement track of each frame of image in the animation playing process based on the Bezier curve in the animation effect algorithm library.

For example, a value of an item attribute "interpolator" of an item node in <Aod2Lock> is Linear, which may indicate that, in a process of playing an animation from the AOD state to the screen-locked state, the electronic device 100 makes a movement track of a resource corresponding to the item node be a curve corresponding to Linear.

keys may indicate a time point of a key frame. For example, a value of an item attribute "keys" of an item node in <Aod2Lock> is "0, 250, 500", which may indicate that, in a process of playing an animation from the AOD state to the screen-locked state, frames of an image whose playing time is 0 ms, 250 ms, and 500 ms are key frames.

values may indicate a value of a corresponding key frame, and the value of the key frame may indicate a display position of the key frame on the screen.

interpolators may indicate a motion curve corresponding to the key frame.

In addition to the foregoing item attributes, more or fewer attributes may be included the item node in <Aod2Lock>.

The node <Lock2Aod> may indicate an animation effect that is of the super wallpaper 5 and that is linked to a change process of changing from the screen-locked state to the AOD state.

A node <Aod2Launcher> may indicate an animation effect that is of the super wallpaper 5 and that is linked to a change process of changing the AOD state to the desktop state.

The node <Lock2Launcher> may indicate an animation effect that is of the super wallpaper 5 and that is linked to a change process of changing from the screen-locked state to the desktop state.

For content included in the node <Lock2Aod>, the node <Aod2Launcher>, and the node <Lock2Launcher>, refer to the descriptions of the node <Aod2 Lock>. Details are not described herein again.

It may be understood that the foregoing description file is merely an example for describing this application, and should not constitute a limitation on this application.

It can be learned from the foregoing example of the description file that the description file may include declaration of processing processes such as rotation, scaling, position adjustment, transparency adjustment, and delay, and declaration of determining a movement track in an image. The foregoing processing of the image may generate one or more animation effects. The electronic device 100 may parse the foregoing description file, and obtain, by using the program code for implementing the animation effect in the animation effect algorithm library, the animation that is linked to a status change process of the electronic device 100. In this way, the user can watch one or more animation effects in the status change process of the electronic device 100.

**The following describes a scenario in which a super wallpaper is set in the electronic device 100 according to an embodiment of this application.**

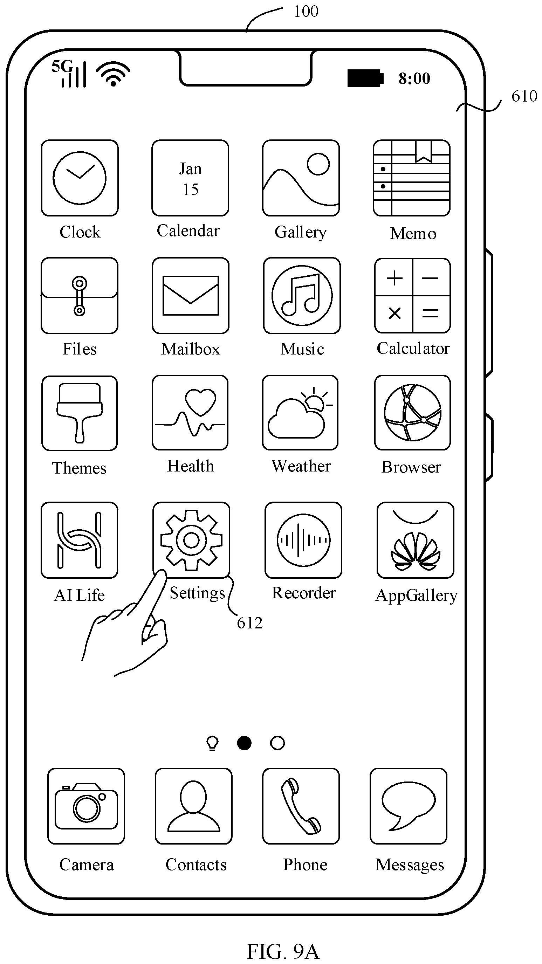

FIG. 9A to FIG. 9D are schematic diagrams of examples of a scenario in which a super wallpaper is set in the electronic device 100.

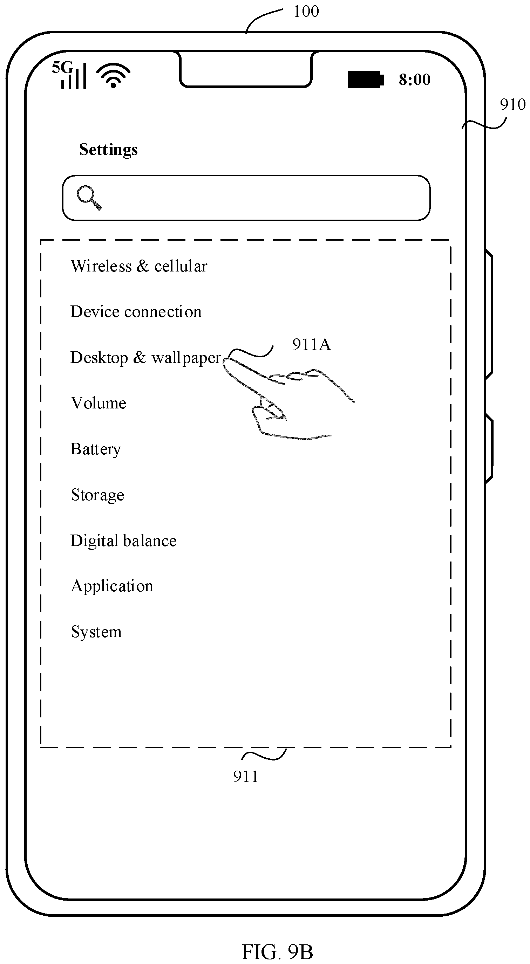

As shown in FIG. 9A, the electronic device 100 may display the user interface 610. For the user interface 610, refer to descriptions shown in FIG. 6A. The settings application icon 612 may be included on the user interface 610. In response to an operation on the settings application icon 612, for example, a touch operation, the electronic device 100 may display a user interface 910 shown in FIG. 9B. The user interface 910 may be a user interface of a settings application. A setting option display region 911 may be included on the user interface 910. An option for setting the electronic device 100, for example, a wireless and cellular option, a device connection option, a desktop and wallpaper option 911A, and a volume option, may be displayed in the setting option display region 911. The wireless and cellular option may be used to set a network connection of the electronic device 100. The device connection option may be used to set a connection between the electronic device 100 and another electronic device. The volume option may be used to set a volume of the electronic device 100.

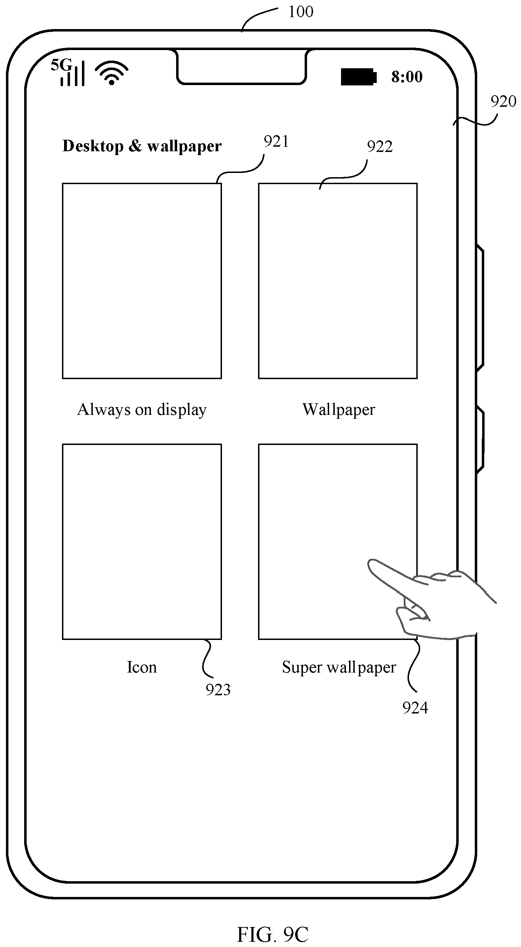

The desktop and wallpaper option 911A may be used to set content such as a desktop display style and a wallpaper of the electronic device 100. As shown in FIG. 9B, in response to an operation on the desktop and wallpaper option 911A, for example, a touch operation, the electronic device 100 may display a user interface 920 shown in FIG. 9C.

As shown in FIG. 9C, an always on display option 921, a wallpaper option 922, an icon option 923, and a super wallpaper option 924 may be included on the user interface 920.

The always on display option 921 may be used by the user to separately set the AOD content of the electronic device 100. In response to an operation on the always on display option 921, the electronic device 100 may display one or more types of AOD content, to be selected by the user.

The wallpaper option 922 may be used by the user to separately set a lock screen wallpaper or a desktop wallpaper of the electronic device 100. In response to an operation on the wallpaper option 922, the electronic device 100 may display one or more types of wallpapers (for example, a static wallpaper or a dynamic wallpaper), to be set by the user as the lock screen wallpaper or the desktop wallpaper of the electronic device 100.

The icon option 923 may be used by the user to set a display style of an application icon on the desktop of the electronic device 100.

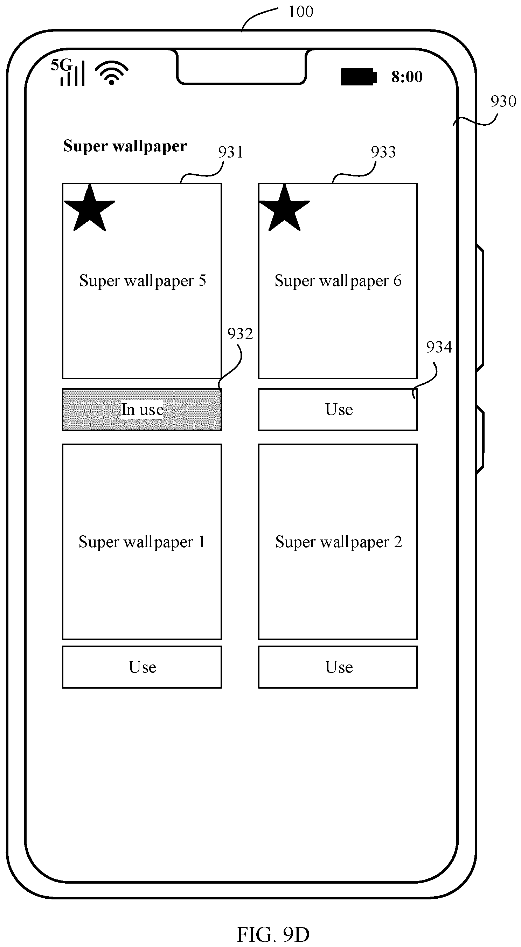

The super wallpaper option 921 may be used by the user to set a super wallpaper of the electronic device 100. In response to an operation on the super wallpaper option 924, the electronic device 100 may display the user interface 930 shown in FIG. 9D. An identifier 931 of the super wallpaper 5, a use control 932, an identifier 933 of a super wallpaper 6, and a use control 934 may be included on the user interface 930.

For the identifier 931 of the super wallpaper 5 and the identifier 933 of the super wallpaper 6, refer to descriptions of the identifier of the super wallpaper shown in FIG. 6F. Details are not described herein again.

The use control 932 may be configured to set the super wallpaper 5 as the super wallpaper of the electronic device 100. The use control 932 is in a selected state shown in FIG. 9D, which may indicate that the super wallpaper 5 corresponding to the identifier 931 is a super wallpaper currently used by the electronic device 100. When the use control 932 is in the selected state, the use control 932 may include selection prompt information. The prompt information may be, for example, a text prompt "in use". A display style of the use control 932 in the selected state is not limited in embodiments of this application.

The use control 934 may be configured to set the super wallpaper 6 as the super wallpaper of the electronic device 100. In response to an operation on the use control 934 shown in FIG. 9D, for example, a touch operation, the electronic device 100 may change a currently used super wallpaper from the super wallpaper 5 to the super wallpaper 6, and display the use control 934 in a selected state.

An identifier of another super wallpaper (for example, the super wallpaper 1 or the super wallpaper 2) and a use control for setting the another super wallpaper as the super wallpaper of the electronic device 100 may also be included on the user interface 930.

It may be understood that the identifier of the super wallpaper included on the user interface 930 may include: an identifier of a super wallpaper made by the electronic device 100 based on image data that is input by the user, and an identifier of a super wallpaper obtained by the electronic device 100 from the theme server 300 based on an operation of downloading the super wallpaper by the user in the theme application.

In addition to the operation of setting the super wallpaper shown in FIG. 9A to FIG. 9D, the user may set, by performing other operations, a super wallpaper currently used by the electronic device 100.

It can be learned from the scenarios shown in FIG. 9A to FIG. 9D that the user can set, by using a settings application, the customized super wallpaper to the super wallpaper currently used by the electronic device 100. Alternatively, the user can set, by using a settings application, the super wallpaper downloaded by using the theme application to the super wallpaper currently used by the electronic device 100.

**The following describes a display method of a super wallpaper according to an embodiment of this application.**

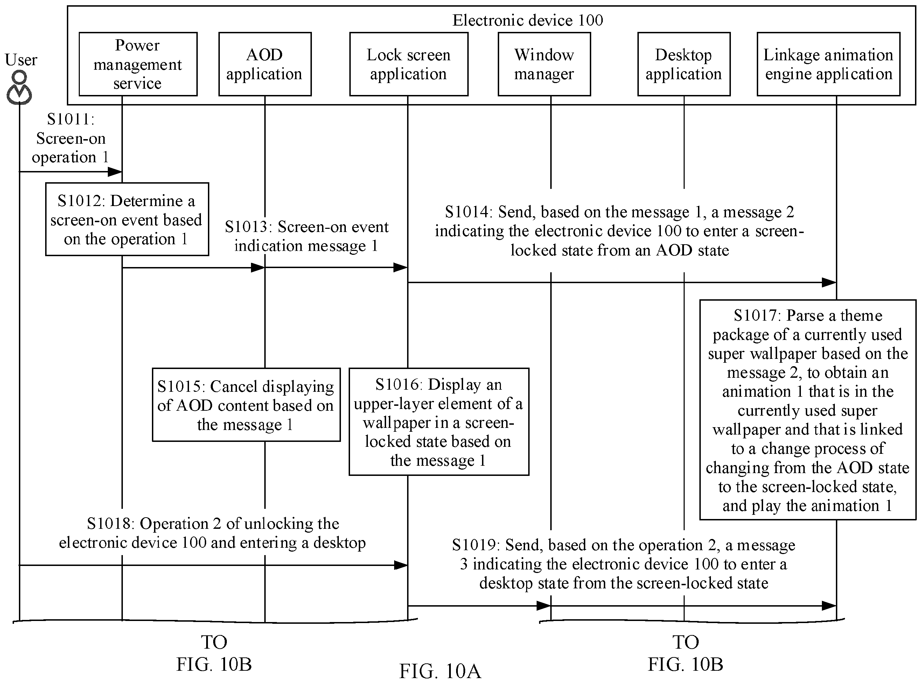

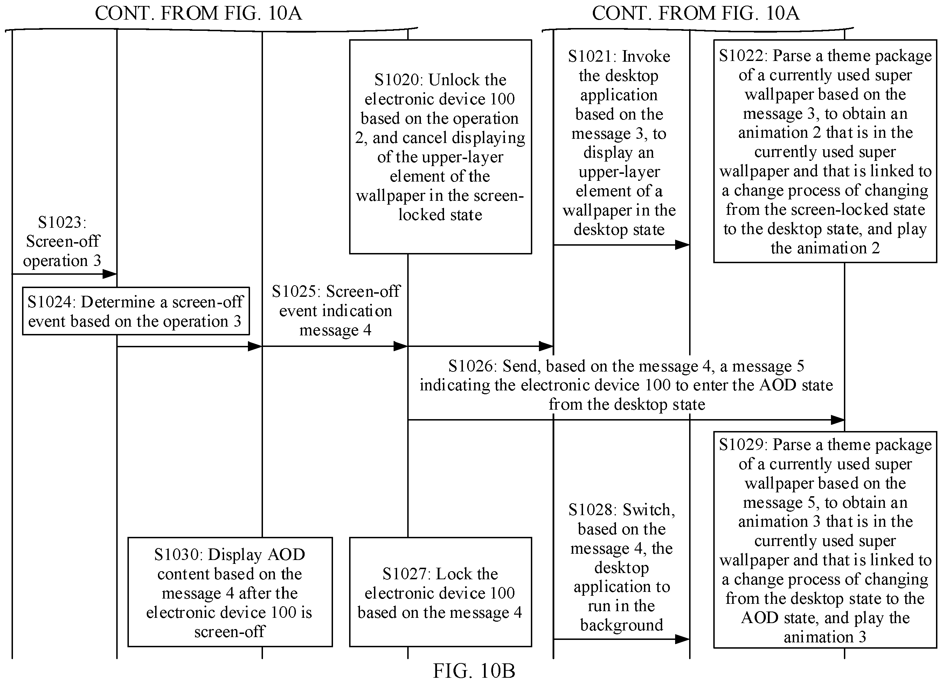

FIG. 10A and FIG. 10B are a flowchart of an example of a display method of a super wallpaper.

As shown in FIG. 10A and FIG. 10B, the method may include step S1011 to step S1030. Step S1011 to step S1017 may be used to describe the display method of the super wallpaper in a process in which the electronic device 100 enters a screen-locked state from an AOD state. Step S1018 to step S1022 may be used to describe the display method of the super wallpaper in a process in which the electronic device 100 enters a desktop state from the screen-locked state. Step S1023 to step S1030 may be used to describe the display method of the super wallpaper in a process in which the electronic device 100 enters the AOD state from the desktop state.

It can be learned from the block diagram of the software structure shown in FIG. 4B that the electronic device 100 may include the power management service, the AOD application, the lock screen application, the window manager, the desktop application, and the linkage animation engine application.
(1) In Step S1011 to step S1017, the electronic device 100 enters the screen-locked state from the AOD state.

S1011: The power management service of the electronic device 100 may detect a screen-on operation 1.

In some embodiments, the electronic device 100 is in the AOD state and is in the locked state. The AOD application can display AOD content on a screen. When the electronic device 100 uses a super wallpaper, the linkage animation engine application may send the AOD content to the AOD application. It may be understood that, when the electronic device 100 uses the super wallpaper, AOD content displayed by the electronic device 100 in the AOD state is associated with a wallpaper presented by the electronic device 100 when the electronic device 100 enters the screen-locked state or the desktop state. A theme package of the super wallpaper may include the AOD content displayed by the electronic device 100 in the AOD state. For example, the AOD content includes the static image whose name is " 1.png" and shown in FIG. 8. When the electronic device 100 is in the AOD state, the AOD application may display content shown in FIG. 1A. For another example, the AOD content may include an animation. When the electronic device 100 is in the AOD state, the AOD application may play the animation. The AOD content is not limited in embodiments of this application.

The screen-on operation 1 may include an operation of tapping a power button, a double-tap operation, a voice instruction wakeup operation, a wrist raising operation by holding the electronic device 100 in a hand, and the like. This is not limited in embodiments of this application.

S1012: The power management service determines a screen-on event based on the operation 1.

S1013: The power management service may send a screen-on event indication message 1 to the AOD application and the lock screen application.

S1014: The lock screen application sends, to the linkage animation engine application based on the message 1, a message 2 indicating the electronic device 100 to enter the screen-locked state from the AOD state.

S1015: The AOD application cancels displaying of the AOD content based on the message 1.

In some embodiments, after receiving the message 1, the AOD application may further determine a last frame of AOD image displayed in the AOD state and position information of the frame of image on the screen. The AOD application may send the last frame of AOD image and the position information of the last frame of image on the screen to the lock screen application. Then, the lock screen application may send the last frame of AOD image and the position information of the last frame of image on the screen to the linkage animation engine application. Alternatively, the AOD application may directly send the last frame of AOD image and the position information of the last frame of image on the screen to the linkage animation engine application.

In this way, based on the last frame of AOD image and the position information of the frame of image on the screen, the linkage animation engine application may determine, in a process of entering the screen-locked state from the AOD state, a first frame of image displayed in the screen-locked state and a position of a related element in the first frame of image. In other words, the linkage animation engine application may determine initial content of an animation that is in the super wallpaper and that is linked to a change process of changing from the AOD state to the screen-locked state. In this way, a wallpaper presented in a process in which the electronic device 100 enters the screen-locked state from the AOD state can bring continuous visual perception to the user.

S1016: The lock screen application may display an upper-layer element of a wallpaper in the screen-locked state based on the message 1.

S1017: The linkage animation engine application may parse a theme package of a currently used super wallpaper based on the message 2, to obtain an animation 1 that is in the currently used super wallpaper and that is linked to the change process of changing from the AOD state to the screen-locked state, and play the animation 1.

The linkage animation engine application may parse the theme package of the super wallpaper, and obtain, from a description file of the super wallpaper, an animation corresponding to a status change process of the electronic device 100. For example, the message 2 indicates the electronic device 100 to enter the screen-locked state from the AOD state. The electronic device 100 may obtain, by parsing a node <Aod2Lock> in the description file, the animation 1 that is in the super wallpaper and that is linked to the change process of changing from the AOD state to the screen-locked state. For an image included in the animation 1, refer to the image A2 to the image A5 shown in FIG. 2. The animation 1 may be, for example, an animation shown in FIG. 1A to FIG. 1E.

For a method in which the linkage animation engine application parses the description file of the super wallpaper to obtain an animation linked to the status change process of the electronic device 100, refer to the descriptions of the description file. Details are not described herein again.

In some embodiments, the lock screen application may further send, to the linkage animation engine application, playing time (for example, an initial moment of animation playing and an end moment of animation playing) indicating playing of the animation that is linked to the change process of changing from the AOD state to the screen-locked state. That is, the message 2 may further include the playing time of the animation. The linkage animation engine application may play the animation 1 based on the playing time of the animation. This can ensure that a playing process of the animation 1 is synchronized with a process in which the electronic device 100 enters the screen-locked state from the AOD state. The user can watch the animation 1 when the electronic device 100 is triggered to enter the screen-locked state from the AOD state.

It should be noted that the lock screen application may display, at the lock screen image layer shown in FIG. 5, the upper-layer element (for example, a lock identifier, time, and a camera control) of the wallpaper in the screen-locked state. The linkage animation engine application may play the animation 1 at the wallpaper image layer shown in FIG. 5.

(2) In Step S1018 to step S1022, the electronic device 100 enters the desktop state from the screen-locked state.

S1018: The lock screen application of the electronic device 100 detects an operation 2 of unlocking the electronic device 100 and entering a desktop.

In some embodiments, the electronic device 100 is in the screen-locked state. The electronic device 100 may display a lock screen interface. A wallpaper displayed at the wallpaper image layer and the upper-layer element that is of the wallpaper in the screen-locked state and that is displayed at the lock screen image layer may be included on the lock screen interface. The wallpaper displayed at the wallpaper image layer may be a dynamic wallpaper or a static wallpaper. It may be understood that the linkage animation engine application may cyclically play the animation 1 when the electronic device 100 is in the screen-locked state. Alternatively, after playing the animation 1 once, the linkage animation engine application may display, at the wallpaper image layer, a frame of image (for example, a last frame of image) in the animation 1 as a static wallpaper in the screen-locked state.

The method for unlocking the electronic device 100 may include fingerprint unlocking, password unlocking, face unlocking, and the like. This is not limited in embodiments of this application.

In some embodiments, the operation 2 may include an unlocking operation and the user operation, shown in FIG. 1E, of sliding upward from the bottom of the electronic device. The operation for triggering the electronic device 100 to enter the desktop state is not limited in embodiments of this application.

S1019: The lock screen application sends, to the window manager and the linkage animation engine application based on the operation 2, a message 3 indicating the electronic device 100 to enter the desktop state from the screen-locked state.

In some embodiments, messages sent by the lock screen application to the window manager and the linkage animation engine application based on the operation 2 may be different. For example, the lock screen application may send, to the window manager, an indication for entering the desktop state, and send the message 3 to the linkage animation engine application. Then, the window manager may invoke the desktop application, so that the electronic device 100 enters the desktop state. The linkage animation engine application may determine a status change process of the electronic device 100 based on the message 3.

S1020: The lock screen application unlocks the electronic device 100 based on the operation 2, and cancels displaying of the upper-layer element of the wallpaper in the screen-locked state.

S1021: The window manager invokes the desktop application based on the message 3, to display an upper-layer element of a wallpaper in the desktop state.

S1022: The linkage animation engine application may parse a theme package of a currently used super wallpaper based on the message 3, to obtain an animation 2 that is in the currently used super wallpaper and that is linked to a change process of changing from the screen-locked state to the desktop state, and play the animation 2.

The linkage animation engine application may parse the theme package of the super wallpaper, and obtain, from a description file of the super wallpaper, an animation corresponding to a status change process of the electronic device 100. For example, the message 3 indicates the electronic device 100 to enter the desktop state from the screen-locked state. The electronic device 100 may obtain, by parsing a node <Lock2 Launcher> in the description file, the animation 2 that is in the super wallpaper and that is linked to the change process of changing from the screen-locked state to the desktop state. For an image included in the animation 2, refer to the image A6 and the image A7 shown in FIG. 2. The animation 2 may be, for example, an animation shown in FIG. 1E to FIG. 1G.

For a method in which the linkage animation engine application parses the description file of the super wallpaper to obtain an animation linked to the status change process of the electronic device 100, refer to the descriptions of the description file. Details are not described herein again.

In some embodiments, the lock screen application may further send, to the linkage animation engine application, playing time (for example, an initial moment of animation playing and an end moment of animation playing) indicating playing of the animation that is linked to the change process of changing from the screen-locked state to the desktop state. That is, the message 3 may further include the playing time of the animation. The linkage animation engine application may play the animation 2 based on the playing time of the animation. This can ensure that a playing process of the animation 2 is synchronized with a process in which the electronic device 100 enters the desktop state from the screen-locked state. The user can watch the animation 2 when the electronic device 100 is triggered to enter the desktop state from the screen-locked state.

It should be noted that the desktop application may display, at the desktop image layer shown in FIG. 5, the upper-layer element (for example, an application icon, time, and weather) of the wallpaper in the desktop state. The linkage animation engine application may play the animation 2 at the wallpaper image layer shown in FIG. 5.

In some embodiments, the electronic device 100 runs a specified APP (for example, a music APP or a payment APP) in the foreground before locking and/or screening off last time. In other words, before the electronic device 100 is locked and/or screen-off last time, instead of the desktop (refer to the desktop shown in FIG. 6A), the electronic device 100 displays a user interface of the specified APP on the screen. In this case, when the electronic device 100 is unlocked again, the electronic device 100 may display a user interface (namely, the user interface of the specified APP) displayed before locking and/or screening off last time. In response to a user operation of unlocking the electronic device 100 and triggering the electronic device 100 to exit from the screen-locked state, the electronic device 100 may play an animation (for example, the animation 2) that is linked to the change process of changing from the screen-locked state to the desktop state, and display the user interface of the specified APP after completing playing of the animation. The user operation of triggering the electronic device 100 to exit from the screen-locked state may be, for example, the operation, shown in FIG. 1E, of sliding upward from the bottom of the electronic device 100. This is not limited in embodiments of this application.

Similarly, when the electronic device 100 is in the AOD state, in response to a user operation of triggering the electronic device 100 to enter the desktop state, the electronic device 100 may play an animation that is linked to a change process of changing from the AOD state to the desktop state, and display the user interface of the specified APP after completing playing of the animation. The user operation of triggering the electronic device 100 to enter the desktop state from the AOD state may be, for example, an operation of fingerprint-unlocking the electronic device 100 when the electronic device 100 is in the AOD state. This is not limited in embodiments of this application.

In other words, the desktop state may include a state of displaying the desktop after the electronic device 100 is unlocked, and may further include a state of displaying the user interface of the specified APP after the electronic device 100 is unlocked. The user interface of the specified APP may be a user interface finally displayed by the electronic device 100 before the electronic device 100 is locked and/or screen-off last time.

(3) In Step S1023 to step S1030, the electronic device 100 enters the AOD state from the desktop state.

S1023: The power management service of the electronic device 100 detects a screen-off operation 3.

In some embodiments, the electronic device 100 is in the desktop state. The electronic device 100 may display the desktop. A wallpaper displayed at the wallpaper image layer and the upper-layer element that is of the wallpaper in the desktop state and that is displayed at the desktop image layer may be included on the desktop. The wallpaper displayed at the wallpaper image layer may be a dynamic wallpaper or a static wallpaper. It may be understood that the linkage animation engine application may cyclically play the animation 2 when the electronic device 100 is in the desktop state. Alternatively, after playing the animation 2 once, the linkage animation engine application may display, at the wallpaper image layer, a frame of image (for example, a last frame of image) in the animation 2 as a static wallpaper in the desktop state.

The operation 3 may be, for example, an operation of tapping a power button. The screen-off operation is not limited in embodiments of this application.

S1024: The power management service determines a screen-off event based on the operation 3.

When the electronic device 100 is screen-on and the operation 3 is detected, the power management service may determine that the operation 3 triggers the screen-off event. A method for determining the screen-off event is not limited to the operation 3. The electronic device 100 may further determine the screen-off event according to another method.

For example, operation-free screen-on time (for example, 5 minutes or 10 minutes) is set in the electronic device 100. The power management service may determine the screen-off event when no operation on the electronic device 100 is detected within the operation-free screen-on time.

S1025: The power management service sends a screen-off event indication message 4 to the AOD application, the lock screen application, and the window manager.

S1026: The lock screen application sends, to the linkage animation engine application based on the message 4, a message 5 indicating the electronic device 100 to enter the AOD state from the desktop state.

S1027: The lock screen application locks the electronic device 100 based on the message 4.

S1028: The window manager switches, based on the message 4, the desktop application to run in the background.

S1029: The linkage animation engine application may parse a theme package of a currently used super wallpaper based on the message 5, to obtain an animation 3 that is in the currently used super wallpaper and that is linked to a change process of changing from the desktop state to the AOD state, and play the animation 3.

The linkage animation engine application may parse the theme package of the super wallpaper, and obtain, from a description file of the super wallpaper, an animation corresponding to a status change process of the electronic device 100. For example, the message 4 indicates the electronic device 100 to enter the AOD state from the desktop state. The electronic device 100 may obtain, by parsing a node <Launcher 2Aod> in the description file, the animation 3 that is in the super wallpaper and that is linked to the change process of changing from the desktop state to the AOD state. For an image included in the animation 3, refer to the image A1 to the image A7 shown in FIG. 2. The animation 3 may be, for example, a reverse process of an animation shown in FIG. 1A to FIG. 1G.

For a method in which the linkage animation engine application parses the description file of the super wallpaper to obtain an animation linked to the status change process of the electronic device 100, refer to the descriptions of the description file. Details are not described herein again.

In some embodiments, the lock screen application may further send, to the linkage animation engine application, playing time (for example, an initial moment of animation playing and an end moment of animation playing) indicating playing of the animation that is linked to the change process of changing from the desktop state to the AOD state. That is, the message 4 may further include the playing time of the animation. The linkage animation engine application may play the animation 3 based on the playing time of the animation. This can ensure that a playing process of the animation 3 is synchronized with a process in which the electronic device 100 enters the AOD state from the desktop state. The user can watch the animation 3 when the electronic device 100 is triggered to enter the AOD state from the desktop state.

51030: The AOD application displays AOD content based on the message 4 after the electronic device 100 is screen-off.

The AOD application may display the AOD content after the electronic device 100 is screen-off. For the AOD content, refer to the descriptions in the foregoing step S1011.

It should be noted that, in a process in which the electronic device 100 enters the AOD state from the desktop state, the linkage animation engine application may play the animation 3 at the wallpaper image layer. Because a process of playing the animation 3 is synchronized with the process in which the electronic device 100 enters the AOD state from the desktop state, the animation 3 may be played completely when the electronic device 100 is about to enter the AOD state. For example, a last frame of image of the animation 3 may be a last frame of image displayed in the screen-locked state before the electronic device 100 enters the AOD state. Then, the AOD application may display the AOD content at the AOD image layer shown in FIG. 5.

In some embodiments, when running the specified APP in the foreground, the electronic device 100 detects a user operation of triggering the electronic device 100 to enter the AOD state. The user operation may be, for example, an operation of tapping a power button. In response to the user operation, the electronic device 100 may be locked and enter the AOD state. The electronic device 100 may cancel displaying of the user interface of the specified APP, and then play the animation (for example, the animation 3) that is linked to the change process of changing from the desktop state to the AOD state. The electronic device 100 may display an AOD interface after completing playing of the animation.

In other words, in a case in which the electronic device 100 displays the desktop or the electronic device 100 displays the specified APP, in response to the user operation of triggering the electronic device 100 to enter the AOD state, the electronic device 100 may play the animation that is linked to the change process of changing from the desktop state to the AOD state.

For a display method of another type of linkage animation, refer to the display method of the super wallpaper shown in FIG. 10A and FIG. 10B.

For a playing process of an animation that is in the super wallpaper and that is linked to another status change process of the electronic device 100, refer to the display method of the super wallpaper in the scenarios in which the electronic device 100 enters the screen-locked state from the AOD state, enters the desktop state from the screen-locked state, and enters the AOD state from the desktop state shown in FIG. 10A and FIG. 10B. The another status change process of the electronic device 100 may include but is not limited to: entering the AOD state from the screen-locked state, entering the desktop state from the AOD state, and entering the screen-locked state from the desktop state.

It can be learned from the method shown in FIG. 10A and FIG. 10B that the electronic device 100 may parse the theme package of the super wallpaper by using the linkage animation engine application, to play a corresponding animation in the super wallpaper in the status change process of the electronic device 100. The linkage animation engine application may parse different theme packages to obtain an animation effect corresponding to the super wallpaper, and implement display of the super wallpaper. The electronic device 100 may need to download only the theme package of the super wallpaper. Compared with a manner in which each time a super wallpaper is used, an application corresponding to the super wallpaper needs to be downloaded and the application needs to be run to display the super wallpaper, the foregoing manner of parsing the theme package of the super wallpaper is simpler, and requires less running space. In addition, a theme package of a super wallpaper usually occupies less memory than an application corresponding to the super wallpaper. The theme package of the super wallpaper can effectively reduce storage space and running space of the electronic device 100.

The user can customize super wallpaper by using the linkage animation engine application, and use the customized super wallpaper in the electronic device 100. This increases interest of the user in using the super wallpaper.

**The following describes a flowchart of a method for displaying a super wallpaper by using a linkage animation engine application according to an embodiment of this application.**

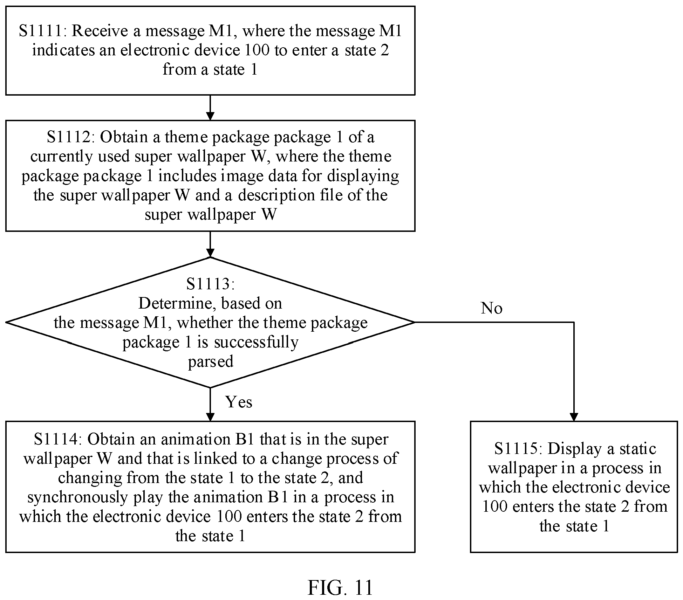

As shown in FIG. 11, the method may include step S1111 to step S1115. The steps shown in FIG. 11 may be completed by a linkage animation engine application on the electronic device 100.

S1111: Receive a message M1, where the message M1 indicates the electronic device 100 to enter a state 2 from a state 1.

The message M1 may be sent by a lock screen application on the electronic device 100 to the linkage animation engine application. The message M1 may be, for example, the message 2 in step S1014 in FIG. 10A, the message 3 in step S1019 in FIG. 10A, or the message 5 in step S1026 in FIG. 10B.

The state 1 and the state 2 may be any one of the following: an AOD state, a screen-locked state, or a desktop state. The state 1 and the state 2 are different.

S1112: Obtain a theme package package 1 of a currently used super wallpaper W, where the theme package package 1 includes image data for displaying the super wallpaper W and a description file of the super wallpaper W.

A super wallpaper currently used by the electronic device 100 may be determined by the electronic device 100 based on an operation of setting a super wallpaper by a user. For a process in which the user sets the super wallpaper, refer to the scenarios shown in FIG. 9A to FIG. 9B.

S1113: Determine, based on the message M1, whether the theme package package 1 is successfully parsed.

S1114: If the theme package package 1 is successfully parsed, obtain an animation B1 that is in the super wallpaper W and that is linked to a change process of changing from the state 1 to the state 2, and synchronously play the animation B1 in a process in which the electronic device 100 enters the state 2 from the state 1.

S1115: If the theme package package 1 is not successfully parsed, display a static wallpaper in a process in which the electronic device 100 enters the state 2 from the state 1.

The linkage animation engine application may parse an animation effect declared by the description file in the theme package package 1, and generate the animation B1 based on an animation effect algorithm library. When obtaining the animation B1, the linkage animation engine application may synchronously play the animation B1 in the process in which the electronic device 100 enters the state 2 from the state 1. When sending the message M1, the lock screen application may further send, to the linkage animation engine application, playing time of the animation that is linked to the change process of changing from the state 1 to the state 2. The playing time of the animation may be determined based on time at which the electronic device 100 exits from the state 1 and enters the state 2. In this way, the linkage animation engine application may synchronize, based on the playing time of the animation, a playing process of the animation B1 with the process in which the electronic device 100 enters the state 2 from the state 1. That is, the user can watch the animation B1 in the process in which the electronic device 100 enters the state 2 from the state 1.

In some embodiments, the image data for displaying the super wallpaper M in the theme package package 1 may be missing, or the animation effect declared by the description file in the theme package package 1 may not have corresponding implementation code in the animation effect algorithm library. In this case, the linkage animation engine application cannot successfully parse the theme package package 1 to obtain the animation B1. In this case, the linkage animation engine application may display the static wallpaper in the process in which the electronic device 100 enters the state 2 from the state 1. The static wallpaper may be a frame of image in an animation corresponding to the super wallpaper.

For example, the super wallpaper W may be a super wallpaper made according to the method shown in FIG. 7A and FIG. 7B. The state 2 may be the screen-locked state. If the theme package package 1 fails to be parsed, the static wallpaper displayed by the linkage animation engine application may be the image (namely, a lock screen wallpaper) shown in (7) in FIG. 7B. The state 2 may be the desktop state. If the theme package package 1 fails to be parsed, the static wallpaper displayed by the linkage animation engine application may be the image (namely, a desktop wallpaper) shown in (2) in FIG. 7A.

The parsing failure of the theme package package 1 may be caused by more other factors. This is not limited in embodiments of this application.

It can be learned from the method shown in FIG. 11 that a super wallpaper may be implemented based on a theme package that includes image data and a description file. The linkage animation engine application can parse the theme package of the super wallpaper and implement an animation effect of the super wallpaper based on the animation effect algorithm library. Each super wallpaper does not need to provide separate program code for implementing an animation effect. In this way, the user can download only the theme package of the super wallpaper or use a theme package of a customized super wallpaper, instead of downloading an application corresponding to the super wallpaper every time the super wallpaper is used. This can effectively reduce storage space and running space of the electronic device 100.

In some embodiments, a linkage animation design application is installed on the electronic device 200 at a wallpaper designer side. The linkage animation design application may be configured to generate a theme package of a linkage animation by using image data (for example, a picture or a video) as an input. The electronic device 200 may upload the theme package of the linkage animation to the theme server 300 by using the linkage animation design application. The linkage animation implemented by the theme package can be released on the theme application to be downloaded and used by the user. An animation effect algorithm library may also be integrated in the linkage animation design application, so that a wallpaper designer can design a linkage animation, and preview the linkage animation. For the theme package of the linkage animation generated by using the linkage animation design application, refer to the theme package of the super wallpaper generated by the linkage animation engine application. Details are not described herein again.

For example, for a scenario in which the linkage animation implemented by the theme package is released on the theme application, refer to the scenario shown in FIG. 6C. For example, a super wallpaper indicated by one or more identifiers (for example, the identifier 631A and the identifier 631B) displayed in the super wallpaper display region 631 shown in FIG. 6C has a corresponding theme package. In response to an operation of downloading the super wallpaper, the electronic device 100 may obtain the theme package of the super wallpaper from the theme server 300. Then, the electronic device 100 may parse the theme package of the super wallpaper by using the linkage animation engine application, to display the super wallpaper.

In some embodiments, the linkage animation design application may further include more input parameters. For example, each frame of image in a linkage animation playing process is set, an animation effect of the linkage animation is set, and a frame rate of linkage animation playing is set. The input parameter can facilitate the wallpaper designer to make a more exquisite linkage animation through a more professional and refined design.

In some embodiments, the linkage animation design application may also be deployed on a cloud (for example, a cloud server). The wallpaper designer may access the cloud server by using the electronic device 200, to use the linkage animation design application.

It can be learned from the foregoing embodiment that the wallpaper designer can generate, by using the linkage animation design application, a theme package of a linkage animation designed by the wallpaper designer, and upload the theme package of the linkage animation to a server at a theme application side. In the process of implementing the linkage animation, a design of the wallpaper designer may be converted into an application that can implement an animation effect of the linkage animation, without requiring a developer to develop the linkage animation according to a linkage animation development specification. This can simplify a design-to-use process of the linkage animation. The wallpaper designer can quickly put a linkage animation designed by the wallpaper designer into use.

It may be understood that the user interfaces described in embodiments of this application are merely example interfaces, and do not constitute limitation on the solutions of this application. In other embodiments, different interface layouts may be used on the user interface, more or fewer controls may be included, and other function options may be increased or decreased. These conditions fall within the protection scope of this application, provided that they are based on a same inventive idea provided in this application.

It should be noted that any feature or any part of any feature in any embodiment of this application may be combined without a conflict, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A linkage animation display method, wherein the method comprises:
receiving, by an electronic device, a first input and a first operation, wherein the first operation is used to generate a linkage animation based on the first input, the first input comprises first image data, and the first image data comprises one or more pictures, one or more videos, or a combination of a picture and a video; and
generating, by the electronic device, a first linkage animation based on the first operation and the first input, wherein the first linkage animation is played when a status of the electronic device changes.

2. The method according to claim 1, wherein a linkage animation used by the electronic device is the first linkage animation; and the method further comprises:
receiving, by the electronic device, a second operation, wherein the second operation is used to trigger the electronic device to enter a second state from a first state;
obtaining, by the electronic device, a first animation segment from the first linkage animation in response to the second operation; and
playing, by the electronic device, the first animation segment when entering the second state from the first state.

3. The method according to claim 2, wherein the first linkage animation comprises a plurality of animation segments; and
the method further comprises:
detecting that the electronic device enters the first state from the second state;
obtaining, by the electronic device, a second animation segment from the first linkage animation, wherein the second animation segment is different from the first animation segment; and
playing, by the electronic device, the second animation segment when entering the first state from the second state.

4. The method according to claim 2, wherein the method further comprises:
detecting that the electronic device enters a third state from the second state;
obtaining, by the electronic device, a third animation segment from the first linkage animation, wherein the third animation segment is different from the first animation segment; and
playing, by the electronic device, the third animation segment when entering the third state from the second state.

5. The method according to any one of claims 1 to 4, wherein the status of the electronic device comprises: any plurality of an always on display state, a screen-locked state, and a desktop state; or a screen-folded state of a folding screen and a screen-unfolded state of the folding screen; or a screen-folded state of a folding screen, a screen-unfolded state of the folding screen, an always on display state, a screen-locked state, and a desktop state.

6. The method according to any one of claims 1 to 5, wherein the electronic device comprises N1 states, and N1 is an integer greater than 1; and the generating, by the electronic device, a first linkage animation based on the first operation and the first input specifically comprises:
obtaining, by the electronic device based on the first operation and the first image data, image data for playing the first linkage animation, wherein the image data for playing the first linkage animation comprises N2 partial pictures and N1 node pictures, one partial picture in the N2 partial pictures is a picture that presents one or more elements comprised in the first image data, the N1 node pictures are pictures respectively displayed by the electronic device in the N1 states, and N2 is a positive integer; and
determining, by the electronic device based on the N2 partial pictures and the N1 node pictures, an animation effect that is of an element comprised in the first image data and that is presented when the electronic device enters another state from one state in the N1 states, to obtain the first linkage animation.

7. The method according to claim 6, wherein the first linkage animation has a first theme package, the first theme package comprises the N2 partial pictures, the N1 node pictures, and a first description file, the animation effect that is of the element comprised in the first image data and that is presented when the electronic device enters the another state from the one state in the N1 states is defined in the first description file, and the first theme package is used by the electronic device to obtain, in a case in which the electronic device uses the first linkage animation, an animation segment that is in the first linkage animation and that is played when the status of the electronic device changes.

8. The method according to claim 6 or 7, wherein the first image data is a first picture; and the determining an animation effect that is of an element comprised in the first image data and that is presented when the electronic device enters another state from one state in the N1 states, to obtain the first linkage animation specifically comprises:
adjusting, by the electronic device in the first picture based on the N2 partial pictures, a position and/or a size of an element comprised in the first picture, to obtain a plurality of pictures comprised in the first linkage animation, wherein positions and/or sizes of the element that is comprised in the first picture and that is displayed in the plurality of pictures are different, wherein
a position and a size of the element that is comprised in the first picture and that is displayed in a first frame of picture of a fourth animation segment are respectively determined based on a position and a size of the element that is comprised in the first picture and that is displayed by the electronic device in a node picture corresponding to the one state, the fourth animation segment is a linkage animation played when the electronic device enters the another state from the one state in the N1 states, and a position and a size of the element that is comprised in the first picture and that is displayed in a last frame of picture of the fourth animation segment are respectively determined based on a position and a size of the element that is comprised in the first picture and that is displayed by the electronic device in a node picture corresponding to the another state.

9. The method according to claim 6 or 7, wherein the first image data is a first video, and the N2 partial pictures comprise pictures that present different changing postures of an element in the first video; and the determining an animation effect that is of an element comprised in the first image data and that is presented when the electronic device enters another state from one state in the N1 states, to obtain the first linkage animation specifically comprises:
setting, by the electronic device based on the N2 partial pictures, a posture change process of the element comprised in the first video, to obtain a plurality of pictures comprised in the first linkage animation, wherein postures that are of the element comprised in the first video and that are displayed in the plurality of pictures are different, wherein
a posture that is of the element comprised in the first video and that is displayed in a first frame of picture of a fourth animation segment is determined based on a posture that is of the element comprised in the first video and that is displayed by the electronic device in a node picture corresponding to the one state, the fourth animation segment is a linkage animation played when the electronic device enters the another state from the one state in the N1 states, and a posture that is of the element comprised in the first video and that is displayed in a last frame of picture of the fourth animation segment is determined based on a posture that is of the element comprised in the first video and that is displayed by the electronic device in a node picture corresponding to the another state.

10. The method according to any one of claims 1 to 9, wherein the first input further comprises a first parameter, and the first parameter comprises one or more of the following: an image comprised in the first linkage animation, an animation effect comprised in the first linkage animation, and a frame rate of playing the first linkage animation.

11. The method according to any one of claims 2 to 10, wherein the first state is the always on display state or the desktop state, the second state is the screen-locked state, and the electronic device displays, on an interface displayed when the electronic device is in the first state, one picture or one animation segment comprised in the first linkage animation; and after the playing the first animation segment, the method further comprises:
displaying, by the electronic device, a lock screen interface, wherein a lock screen wallpaper and an upper-layer element of the wallpaper in the screen-locked state are displayed on the lock screen interface, and the lock screen wallpaper is one picture or one animation segment comprised in the first linkage animation.

12. The method according to any one of claims 2 to 10, wherein the first state is the always on display state or the screen-locked state, the second state is the desktop state, and the electronic device displays, on an interface displayed when the electronic device is in the first state, one picture or one animation segment comprised in the first linkage animation; and after the playing the first animation segment, the method further comprises:
displaying, by the electronic device, a desktop, wherein a desktop wallpaper and an upper-layer element of the wallpaper in the desktop state are displayed on the desktop, and the desktop wallpaper is one picture or one animation segment comprised in the first linkage animation.

13. The method according to any one of claims 2 to 10, wherein the first state is the screen-locked state or the desktop state, the second state is the always on display state, and the electronic device displays, on an interface displayed when the electronic device is in the first state, one picture or one animation segment comprised in the first linkage animation; and after the playing the first animation segment, the method further comprises:
displaying, by the electronic device, an always on display interface, wherein one picture or one animation segment comprised in the first linkage animation is displayed on the always on display interface.

14. The method according to any one of claims 1 to 13, wherein the method further comprises:
receiving, by the electronic device, an operation of uploading the first linkage animation to a first server, and uploading the first linkage animation to the first server.

15. The method according to any one of claims 1 to 14, wherein the method further comprises:
receiving, by the electronic device, a third operation, and downloading a second linkage animation from the first server; and
changing, by the electronic device, the linkage animation used by the electronic device from the first linkage animation to the second linkage animation, to play the second linkage animation when the status of the electronic device changes.

16. An electronic device, wherein the electronic device comprises a memory and a processor, the memory is configured to store a computer program, and the processor is configured to invoke the computer program, so that the electronic device performs the method according to any one of claims 1 to 15.

17. A computer-readable storage medium, comprising instructions, wherein when the instructions are run on an electronic device, the electronic device is enabled to perform the method according to any one of claims 1 to 15.

18. A computer program product, wherein the computer program product comprises computer instructions, and when the computer instructions are run on an electronic device, the electronic device is enabled to perform the method according to any one of claims 1 to 15.
